# EUROPEAN PATENT APPLICATION

(11) **EP 4 819 529 A1**
(43) Date of publication of application: **07.10.2026**
(21) Application number: 24933333.7
(22) Date of filing: 02.04.2024
(51) Int. Cl.: H04L 5/14, H04W 74/0833

(54) **RANDOM ACCESS METHOD AND APPARATUS, AND DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); XU, Jing, Dongguan, Guangdong 523860 (CN)
(74) Representative: Penza, Giancarlo
(86) International application number: PCT/CN2024/085676
(87) International publication number: WO 2025/208374

(57) **Abstract**

Provided in the present application are a random access method and apparatus, and a device, a chip and a storage medium. The method comprises: receiving a first random access channel (RACH) configuration and/or a second RACH configuration, wherein the first RACH configuration and/or the second RACH configuration are used for configuring a plurality of types of physical random access channel (PRACH) resources; and sending a PRACH on a target PRACH resource, wherein the target PRACH resource is one of the plurality of types of PRACH resources configured by using the first RACH configuration and/or the second RACH configuration.

## Description

### TECHNICAL FIELD

The present disclosure relates to the field of communication technology, in particular to a random access method and apparatus, a device, a chip and a storage medium.

### BACKGROUND

In New Radio (NR), two types of random access, contention-based random access and non-contention-based random access, are supported. During the random access procedure corresponding to any type of random access, a terminal device needs to send a Physical Random Access Channel (PRACH) to a network device. However, how the terminal device to determine the PRACH resource(s used for sending the PRACH is an urgent problem to be solved.

### SUMMARY

The present disclosure provides a random access method and apparatus, a device, a chip and a storage medium.

In a first aspect, the random access method is provided in the present disclosure, which includes the following operations.

A terminal device receives a first random access channel (RACH) configuration and/or a second RACH configuration, where the first RACH configuration and/or the second RACH configuration is/are used to configure a plurality of types of physical random access channel (PRACH) resources.

The terminal device sends a PRACH on a target PRACH resource, where the target PRACH resource is one of the plurality of types of PRACH resources configured by the first RACH configuration and/or the second RACH configuration.

In a second aspect, the random access method is provided in the present disclosure, which includes the following operations.

A network device sends a first random access channel (RACH) configuration and/or a second RACH configuration, where the first RACH configuration and/or the second RACH configuration is/are used to configure a plurality of types of physical random access channel (PRACH) resources.

The network device receives a PRACH on a target PRACH resource, where the target PRACH resource is one of the plurality of types of PRACH resources configured by the first RACH configuration and/or the second RACH configuration.

In a third aspect, a random access apparatus is provided in the present disclosure, the apparatus is applied to a terminal device, and the apparatus includes a first receiving unit and a first sending unit.

The first receiving unit is configured to receive a first random access channel (RACH) configuration and/or a second RACH configuration, where the first RACH configuration and/or the second RACH configuration is/are used to configure a plurality of types of physical random access channel (PRACH) resources.

The first sending unit is configured to send a PRACH on a target PRACH resource, where the target PRACH resource is one of the plurality of types of PRACH resources configured by the first RACH configuration and/or the second RACH configuration.

In a fourth aspect, a random access apparatus is provided in the present disclosure, the apparatus is applied to a network device, and the apparatus includes a second sending unit and a second receiving unit.

The second sending unit is configured to send a first random access channel (RACH) configuration and/or a second RACH configuration, where the first RACH configuration and/or the second RACH configuration is/are used to configure a plurality of types of physical random access channel (PRACH) resources.

The second receiving unit is configured to receive a PRACH on a target PRACH resource, where the target PRACH resource is one of the plurality of types of PRACH resources configured by the first RACH configuration and/or the second RACH configuration.

In a fifth aspect, a communication device is provided in the present disclosure. The communication device includes a memory, a processor, and a transceiver. The memory is configured to store a computer program; the processor is connected to the memory and is configured to call and run the computer program from the memory to implement the method of the first aspect or the second aspect. The transceiver is configured to receive and send information during information interaction with other external devices.

In a sixth aspect, a chip is provided in the present disclosure. The chip includes a memory, a processor, and a transceiver. The memory is configured to store a computer program. The processor connected to the memory, configured to call and run a computer program from the memory to enable a device on which the chip is mounted to perform the method of the first aspect or the second aspect. The transceiver is configured to receive and send information during information interaction with other external devices.

In a seventh aspect, a computer-readable storage medium is provided in the present disclosure. The computer-readable storage medium stores a computer program thereon, and when the computer program is executed by at least one processor, at least one processor is enabled to implement the method of the first aspect or the second aspect described above.

In an eighth aspect, the computer program product is provided in the present disclosure. The computer program product includes a computer program or instructions that, when executed by a processor, enables the processor to implement the method of the first aspect or the second aspect described above.

In a ninth aspect, a computer program is provided in the present disclosure. The computer program causes a computer to implement the method of the first aspect or the second aspect described above.

The present disclosure provides the random access method, where the terminal device can receive the first RACH configuration and/or the second RACH configuration, and the first RACH configuration and/or the second RACH configuration is/are used to configure the plurality of types of PRACH resources; and the terminal device can send the PRACH on the target PRACH resource, where the target PRACH resource is one of the plurality of types of PRACH resources configured by the first RACH configuration and/or the second RACH configuration. In such way, the terminal device may select the target PRACH resource among the plurality of types of PRACH resources configured by the network device to send the PRACH. Thus, the reliability of random access can be ensured, the conflict of random access contention between different terminal devices can be reduced, and the success rate of random access can be improved.

### BRIEF DESCRIPTION OF THE DRAWINGS

The accompanying drawings described herein are used to provide a further understanding of the present disclosure and constitute a part of the present disclosure. The schematic embodiments of the present disclosure and the description thereof are used to explain the present disclosure and do not constitute an improper limitation on the present disclosure. In the drawings:
FIG. 1 is a schematic diagram of a communication architecture.
FIG. 2A is a first schematic diagram of an uplink subband.
FIG. 2B is a second schematic diagram of an uplink subband.
FIG. 3 is a first schematic diagram of a PRACH resource.
FIG. 4 is a second schematic diagram of a PRACH resource.
FIG. 5 is a third schematic diagram of a PRACH resource.
FIG. 6 is a schematic diagram of a PRACH resource according to an embodiment of the present disclosure.
FIG. 7 is a schematic flowchart of a random access method according to an embodiment of the present disclosure.
FIG. 8 is a schematic structural diagram of a random access apparatus 800 according to an embodiment of the present disclosure.
FIG. 9 is a schematic structural diagram of a random access apparatus 900 according to an embodiment of the present disclosure.
FIG. 10 is a schematic diagram of a structural composition of a communication device according to an embodiment of the present disclosure.
FIG. 11 is a schematic structural diagram of a chip according to an embodiment of the present disclosure.
FIG. 12 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure. It is apparent that the described embodiments are some embodiments, but not all embodiments of the present disclosure. Based on the embodiments in the present disclosure, all other embodiments obtained by those of ordinary skill in the art without making creative efforts shall fall within the scope of protection of the present disclosure.

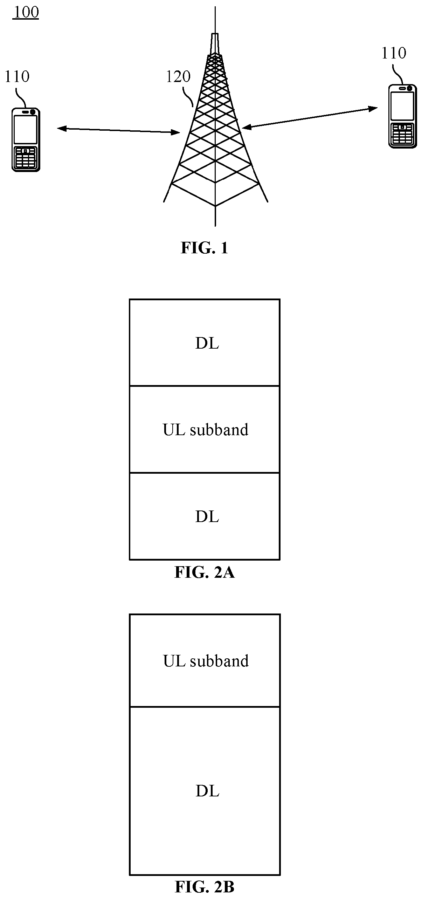

FIG. 1 is a schematic diagram of an application scenario according to an embodiment of the present disclosure.

As shown in FIG. 1, a communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are only illustrative of the communication system 100, but the embodiments of the present disclosure are not limited thereto. That is, the technical solutions of the embodiments of the present disclosure can be applied to various communication systems, for example, a Long Term Evolution (LTE) system, an LTE Time Division Duplex (TDD) system, a Universal Mobile Telecommunication System (UMTS), an Internet of Things (IoT) system, and a Narrow Band Internet of Things (NB-IoT) system, an enhanced Machine-Type Communications (eMTC) system, a 5G communication system (also known as NR communication system), or future communication systems, etc.

In the communication system 100 illustrated in FIG. 1, the network device 120 may be an access network device that communicates with the terminal device 110. The access network device may provide communication coverage for a particular geographical area and may communicate with the terminal device 110 located within the coverage area.

The network device 120 may be an Evolutional Node B (eNB or eNodeB) in an LTE system, a Next Generation Radio Access Network (NG RAN) device, a base station (gNB) in an NR system, or a wireless controller in a Cloud Radio Access Network (CRAN), or the network device 120 may be a relay station, an access point, an in-vehicle device, a wearable device, a hub, a switch, a bridge, a router, or a network device in a future evolved Public Land Mobile Network (PLMN), or the like.

The terminal device 110 may be any terminal device including, but not limited to, a terminal device that employs a wired or wireless connection with the network device 120 or other terminal devices.

For example, the terminal device 110 may refer to an access terminal, a User Equipment (UE), a user unit, a user station, a mobile station, a mobile site, a remote station, a remote terminal, a mobile device, a user terminal, a terminal, a wireless communication device, a user agent, or a user device. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device or other processing device connected to a wireless modem, an in-vehicle device, a wearable device, a terminal device in a 5G network, or a terminal device in a future evolved network, or the like.

The terminal device 110 may be used for device-to-device (D2D) communication.

FIG. 1 illustrates one network device and two terminal devices as an example. Optionally, the communication system 100 may include multiple network devices and another number of terminal devices may be included in the coverage area of each network device, which is not limited in the embodiments of the present disclosure.

It should be noted that FIG. 1 merely illustrates a system to which the present disclosure is applicable in the form of an example, and of course, the method illustrated in the embodiments of the present disclosure may be applicable to other systems. Furthermore, the terms "system" and "network" are generally used interchangeably herein.

In the following description, reference is made to "some embodiments" which describe a subset of all possible embodiments, but it will be understood that "some embodiments" may be the same subset or different subsets of all possible embodiments and may be combined with each other without conflict.

It should be understood that the term "first/second/third" referred to in the embodiments of the present disclosure is only used to distinguish similar objects, and does not represent a specific ranking of objects. It should be understood that "first/second/third" may be interchanged in a specific order or sequence where permitted, so that the embodiments of the present disclosure described herein can be implemented in an order other than that illustrated or described herein.

It should also be understood that the term "and/or" herein is merely an association relationship describing an associated objects, indicating that there may be three relationships, for example, A and/or B, which may mean that A exists alone, A and B exists simultaneously, and B exists alone. In addition, the character "/" herein generally indicates that the associated objects before and after are in an "or" relationship.

It should also be understood that the "indication" referred to in the embodiments of the present disclosure may be a direct indication, an indirect indication, or an indication that there is an association relationship. For example, A indicates B, which may mean that A directly indicates B, e.g., B may be acquired by A. It may also be indicated that A indirectly indicates B, for example, A indicates C, and B can be acquired by C. It can also be indicated that there is an association relationship between A and B.

It should also be understood that the "correspondence" mentioned in the embodiments of the present disclosure may mean that there is a direct correspondence or an indirect correspondence between the two, or may mean that there is a correlation between the two, or may be a relationship between indicating and being indicated, configuring and being configured, or the like.

It should also be understood that the "predefined" or "predefined rules" mentioned in the embodiments of the present disclosure can be realized by pre-storing corresponding codes, tables, or other means that can be used to indicate relevant information in advance in devices (for example, including terminal devices and network devices), and the specific implementation method thereof is not limited in the present disclosure. For example, predefinition may refer to being defined in a protocol. It should also be understood that, in the embodiments of the present disclosure, the "protocol" may refer to a standard protocol in the communication field, and may include, for example, an LTE protocol, an NR protocol, and related protocols applied to future communication systems, which is not limited in the present disclosure.

In order to facilitate understanding of the technical solutions of the embodiments of the present disclosure, the related technologies of the embodiments of the present disclosure will be described below, and the following related technologies can be arbitrarily combined with the technical solutions of the embodiments of the present disclosure as optional solutions, and all of them belong to the protection scope of the embodiments of the present disclosure.

In NR, two types of random access, contention-based random access and non-contention-based random access, are supported. During the random access procedure corresponding to any type of random access, the terminal device needs to send a PRACH (i.e., Message 1 (Msg 1)) to the network device. Exemplarily, the terminal device is a user equipment aware of Subband Full Duplex Aware User Equipment (SBFD-Aware UE).

Taking a cell-common PRACH as an example, the signaling structure of PRACH configuration is introduced below.

The cell-common PRACH is configured in a common Bandwidth Part-Uplink Common (BWP-Uplink Common), which is configured by a common Random Access Channel (RACH) (RACH-ConfigCommon), or configured by an additional RACH (AdditionRACH-Config), where each AdditionRACH-Config is associated with a Feature or a Feature combination.

In RACH-ConfigCommon, parameters related to the RACH resource are configured by a generic RACH configuration (RACH-ConfigGeneric); parameters related to the mapping between RACH and Synchronization Signal and PBCH Block (SSB) are configured by the SSB(s) in each (Per) RACH and contention-based random access preamble in each (Per) SSB (SSB-perRACH-OccasionAndCB-PreamblesPerSSB); and parameters related to the Feature/Feature Combination associated with RACH-ConfigCommon are configured by a list of feature combination preambles (featureCombinationPreamblesList).

The time domain resource/preamble resource of RACH is configured by the PRACH configuration index (PRACH-ConfigurationIndex). For example, the RACH time domain resource/preamble resource is given by three PRACH configuration tables corresponding to different frequency bands and frequency band formats, respectively. One of the PRACH configuration tables is the PRACH configuration of a Frequency Division Duplex (FDD) band in Frequency Range 1 (FR1), another PRACH configuration table is the PRACH configuration of a TDD band in FR1, and the third PRACH configuration table is the PRACH configuration in FR2. The terminal device can determine the PRACH configuration table used when receiving the PRACH configuration according to the frequency band and frequency band format of the cell in which it resides. On such basis, the high layer signaling PRACH-ConfigurationIndex may indicate a sequence number in the corresponding PRACH configuration table. The terminal device may acquire the PRACH time domain resource configuration information of the cell according to the corresponding PRACH configuration table, and the PRACH time domain resource configuration information may include: a format of the PRACH sequence, a configuration period and a system frame number, a subframe/slot sequence number, a PRACH slot, a starting symbol, and the number of consecutive occurrences.

The frequency domain resource of RACH is configured by the parameters Msg 1-Frequency Division Multiplexing (FDM) (i.e., Msg 1-FDM) and Msg 1-FrequencyStart. For example, NR supports configuring PRACH resources with 1, 2, 4, or 8 FDMs through the parameter Msg 1-FDM to expand the PRACH capacity; and in a case where one or more PRACH resources are configured in the frequency domain, these PRACH resources are continuously distributed in the frequency domain. The network device may notify, through the parameter Msg 1-FrequencyStart, the offset of the starting Physical Resource Block (PRB) of the first random access occasion (RACH Occasion, RO) resource in the frequency domain relative to the starting PRB of the BWP.

The power parameter of RACH is configured by the preamble target received power (PreambleReceivedTargetPower) (i.e., the initial parameter configured by Radio Resource Control (RRC)), the maximum number of preamble transmissions (PreambleTransMax), and the ramping step of the preamble power (Preamble_Power_Ramping_Step) parameter. For example, the terminal device may determine the transmission power of the PRACH Transmission Occasion i on the BWP b of the serving cell c of the carrier f according to the following formula: ${P}_{PRACH , b , f , c} \left(i\right) = min \left\{{P}_{CMAX , f , c}\left(i\right),{P}_{PRACH , target , f , c}+{PL}_{b , f , c}\right\}$ (1)

Herein, *P*_{CMAX*,f,c*}(*i*) may be the maximum output power configured by the terminal device (the UE Configured Maximum Output Power). *P*_{PRACH,target*,f,c*} may be the (preamble) target reception power of the PRACH provided by higher layers (i.e., the PRACH Target Reception Power Preamble_Received_Target_Power Provided by Higher Layers). *PL*_{*b*,*f**,**c*} may be a path loss corresponding to a reference signal measured by the terminal device, where the reference signal may be an SSB, a Channel State Information-Reference Signal (CSI-RS), or the like, which are not limited in the embodiments of the present disclosure.

During the random access procedure, if the terminal device sends a PRACH but does not receive a Random Access Response (RAR) from the network device, or does not successfully receive a contention resolution message, the terminal device needs to retransmit the PRACH. When the terminal device supports multiple transmission beams, if the transmission beams remain unchanged, the PRACH transmission power of the retransmission is ramped up on the basis of the PRACH power of the last transmission until the random access procedure is successfully completed.

Furthermore, the protocol provides that, for TDD spectrum, if a terminal device is provided with a TDD-uplink (UL)-DownLink (DL)-common configuration, a valid PRACH resource (or valid RO) is satisfied with one or more of the following conditions, where the valid PRACH resource may be a non subband Full Duplex (SBFD) PRACH resource.

The PRACH resource is in a UL symbol; and/or,
the PRACH resource does not precede an SSB in the PRACH slot, and the PRACH resource is after a previous downlink symbol and has an interval of at least N symbols from the previous downlink symbol; and the PRACH resource is after a previous SSB symbol and has an interval of at least N symbols from the previous SSB (i.e., it does not Precede a SS/PBCH Block in the PRACH Slot and Starts at Least N_Gap Symbols after a Last DownLink Symbol and at Least N_Gap Symbols after a Last SS/PBCH Block Symbol).

In order to overcome the problems of weak uplink coverage, large uplink delay and insufficient uplink capacity caused by less uplink resource allocation in NR TDD, the 3rd Generation Partnership Project (3GPP) introduced Cross Division Duplex (XDD) technology in Release 18 (R18), that is, data can be transmitted and received simultaneously on different subbands of the same subframe/slot/symbol. This technology is mainly used on the network device side, and the terminal device side still maintains the current state, that is, only the transmission or reception of data can be supported in one subframe/slot/symbol.

The R19 SBFD Work Item (WI) specifies that uplink transmission is in the Uplink Subband (UL Subband) and downlink reception is in the Downlink Subband (DL Subband). The uplink subband refers to a continuous segment of uplink frequency domain resources, and the downlink subband refers to a continuous segment of downlink frequency domain resources.

Exemplarily, FIG. 2A is a first schematic diagram of an uplink subband. An intermediate subband of a downlink or flexible subframe/slot/symbol may be configured as an uplink subband.

Exemplarily, FIG. 2B is a second schematic diagram of an uplink subband. A non-intermediate subband of a downlink or flexible subframe/slot/symbol may be configured as an uplink subband.

In an RRC-Connected State, the SBFD symbol can also support PRACH transmission. Herein, the SBFD symbol may also be referred to as a DL symbol, and a non SBFD symbol may also be referred to as a UL symbol.

Two RACH configurations are proposed in the related art: a non SBFD-related RACH configuration and an SBFD-related RACH configuration. The non SBFD-related RACH configuration may also be referred to as a legacy RACH configuration, and the SBFD-related RACH configuration may also be referred to as an additional RACH configuration. The non SBFD-related RACH configuration may be used to configure the non SBFD PRACH resource and/or the SBFD PRACH resource, and the SBFD-related RACH configuration may also be used to configure the non SBFD PRACH resource and/or the SBFD PRACH resource.

It should be understood that the non SBFD PRACH resource may also be referred to as a Legacy PRACH resource, a Legacy RO, a RO in a UL symbol and/or flexible symbol, or, a RO that satisfies validity conditions in the related art. The SBFD PRACH resource may also be referred to as an SBFD RO, or an RO in a DL symbol and/or flexible symbol configured with the SBFD subband.

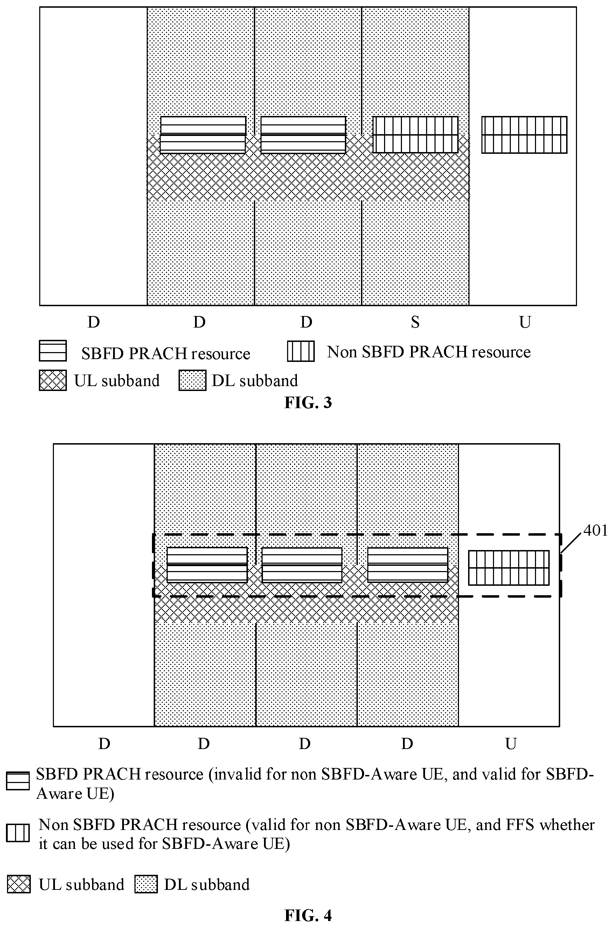

The SBFD PRACH resource and the non SBFD PRACH resource will be briefly described below with reference to FIG. 3.

As shown in FIG. 3, the three Ds may represent three downlink slots, and in the order from left to right, the latter two downlink slots are configured with the uplink subband and the downlink subband. An S may represent a flexible slot configured with the uplink subband and the downlink subband, and since the latter two downlink slots and the flexible slot are configured with the uplink subband and the downlink subband, the latter two downlink slots and the flexible slot may also be referred to as SBFD slots. A U may represent an uplink slot.

It should be understood that the non SBFD PRACH resource may be in the uplink slot, or the non SBFD PRACH resource may be in the uplink slot and the flexible slot.

It should also be understood that the SBFD PRACH resource may be in the SBFD slot, or that the SBFD PRACH resource may be in the SBFD slot, excluding a portion of the non SBFD PRACH resource.

The related art proposes two options: Option 1 and Option 2. These two options are explained below.

Option 1: A SBFD-Aware UE and a UE that is not aware of SBFD (i.e., a non SBFD-aware UE, which is not the SBFD-Aware UE) may multiplex the same set of non SBFD-related RACH configurations, and the non SBFD-related RACH configurations may be used to configure SBFD PRACH resources and/or non SBFD PRACH resources. The non SBFD-aware UE may also be referred to as a Legacy UE.

FIG. 4 is a second schematic diagram of a PRACH resource. As shown in FIG. 4, a non SBFD-related RACH configuration may be used to configure a PRACH resource 401, which may include an SBFD PRACH resource located in an SBFD slot, and a non SBFD PRACH resource located in an uplink slot.

It should be understood that four Ds in FIG. 4 represent four downlink slots, and in the order from left to right, the last three downlink slots are configured with the uplink subband and the downlink subband. At this time, the last three downlink slots may also be referred to as the SBFD slots. A U may represent an uplink slot.

It should also be understood that the non SBFD PRACH resource may be in the uplink slot, and the SBFD PRACH resource may be in the SBFD slot.

For a PRACH resource (such as an SBFD PRACH resource or a non SBFD PRACH resource), the availability of the PRACH resource for the non SBFD-Aware UE and the SBFD-Aware UE may include the following.

For the non SBFD-aware UE: the non SBFD PRACH resource is valid, and the SBFD PRACH resource is invalid.

For the SBFD-Aware UE: the SBFD PRACH resource is valid, and whether the non SBFD PRACH resource is valid remains For Further Study (FFS).

Option 2: The non SBFD-aware UE may read the non SBFD-related RACH configuration in a System Information Block (SIB) message; the SBFD-Aware UE may read the non SBFD-related RACH configuration and the SBFD-related RACH configuration in the SIB message; the non SBFD-related RACH configuration may be used to configure the SBFD PRACH resource and/or the non SBFD PRACH resource; and the SBFD-related RACH configuration may also be used to configure the SBFD PRACH resource and/or the non SBFD PRACH resource.

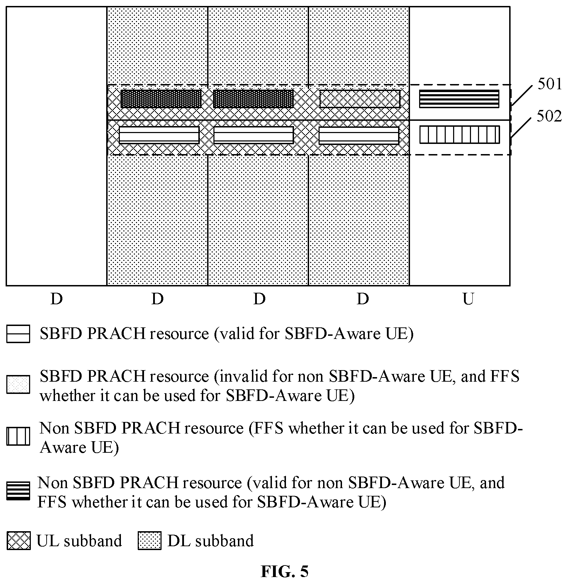

FIG. 5 is a third schematic diagram of a PRACH resource. As shown in FIG. 5, a non SBFD-related RACH configuration may be used to configure a PRACH resource 501, which may include the SBFD PRACH resource located in the SBFD slot, and the non SBFD PRACH resource located in the uplink slot. The SBFD-related RACH configuration may be used to configure a PRACH resource 502, which may include the SBFD PRACH resource located in the SBFD slot, and the non SBFD PRACH resource located in the uplink slot.

It should be understood that the four Ds in FIG. 5 represent four downlink slots, and in the order from left to right, the last three downlink slots are configured with the uplink subband and the downlink subband. At this time, the last three downlink slots may also be referred to as the SBFD slots. A U may represent an uplink slot.

It should also be understood that the non SBFD PRACH resource may be in the uplink slot, and the SBFD PRACH resource may be in the SBFD slot.

For a PRACH resource (such as an SBFD PRACH resource or a non SBFD PRACH resource), the availability of the PRACH resource for the non SBFD-Aware UE and the SBFD-Aware UE may include the following.

For the non SBFD-Aware UE, the non SBFD PRACH resource configured by the non SBFD-related RACH configuration is valid, and the SBFD PRACH resource configured by the non SBFD-related RACH configuration is invalid.

For the SBFD-Aware UE, the SBFD PRACH resource configured by the SBFD-related RACH configuration is valid, and whether the non SBFD PRACH resource configured by the SBFD-related RACH configuration, as well as the SBFD PRACH resource and the non SBFD PRACH resources configured by the non SBFD-related RACH configuration are valid remains FFS.

That is, the SBFD-related RACH configuration and the non SBFD-related RACH configuration can configure the following four types of PRACH resources:
Type 1: non SBFD PRACH resource configured by the non SBFD-related RACH configuration;
Type 2: SBFD PRACH resource configured by the non SBFD-related RACH configuration;
Type 3: non SBFD PRACH resource configured by the SBFD-related RACH configuration;
Type 4: SBFD PRACH resource configured by the SBFD-related RACH configuration.

Herein, for the SBFD-Aware UE, the PRACH resource of Type 4 is valid, and whether the PRACH resources of the other three types are valid remains FFS.

In the embodiments of the present disclosure, for the SBFD-Aware UE, in Option 1, the SBFD PRACH resource configured by the non SBFD-related RACH configuration is valid, and it may be assumed that the non SBFD PRACH resource configured by the non SBFD-related RACH configuration is valid.

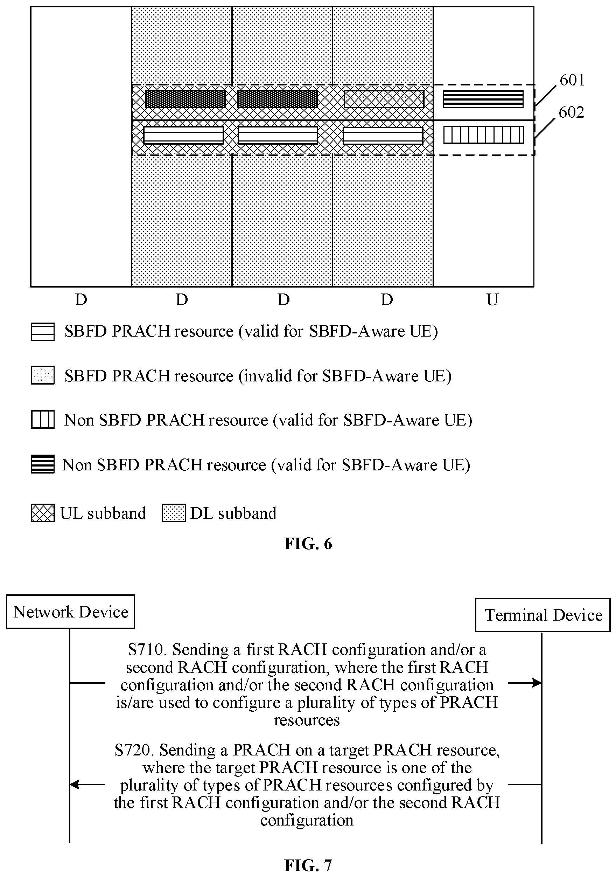

In the embodiments of the present disclosure, for the SBFD-Aware UE, in Option 2, as shown in FIG. 6, the non SBFD-related RACH configuration may be used to configure a PRACH resource 601, which may include the SBFD PRACH resource located in the SBFD slot, and the non SBFD PRACH resource located in the uplink slot. The SBFD-related RACH configuration may be used to configure a PRACH resource 602, which may include the SBFD PRACH resource located in the SBFD slot, and the non SBFD PRACH resource located in the uplink slot.

It should be understood that the four Ds in FIG. 6 represent four downlink slots, in the order from left to right, the last three downlink slots are configured with the uplink subband and the downlink subband. At this time, the last three downlink slots may also be referred to as the SBFD slots. A U may represent an uplink slot.

It should also be understood that the non SBFD PRACH resource may be in the uplink slot, and the SBFD PRACH resource may be in the SBFD slot.

For the PRACH resource (such as the SBFD PRACH resource or the non SBFD PRACH resource), the SBFD PRACH resource configured by the SBFD-related RACH configuration (i.e., the PRACH resource of Type 4) is valid. It can be assumed that the non SBFD PRACH resource configured by the SBFD-related RACH configuration (i.e., the PRACH resource of Type 3), the non SBFD PRACH resource configured by the non SBFD-related RACH configuration (i.e., the PRACH resource of Type 1) are also valid; furthermore, the SBFD PRACH resource configured by the non SBFD-related RACH configuration (i.e., the PRACH resource of Type 2) is invalid. That is, the PRACH resources of Type 1, Type 3 and Type 4 are all valid, and the PRACH resource of Type 2 is invalid.

It should be noted that, in a case where the PRACH resource is valid, the PRACH resource may be used for a terminal device (such as an SBFD-Aware UE) to send a PRACH. When the PRACH resource is invalid, the PRACH resource cannot be used for the terminal device to send the PRACH. For example, for the SBFD-Aware UE, the SBFD PRACH resource configured by the SBFD-related RACH configuration is valid, and at this time, the SBFD-Aware UE may send the PRACH on the SBFD PRACH resource. For another example, for the SBFD-Aware UE, the SBFD PRACH resource configured by the non SBFD-related RACH configuration is invalid, and the SBFD-Aware UE cannot send the PRACH on the SBFD PRACH resource at this time.

For some types of terminal devices (such as SBFD-Aware UEs), based on the assumption of Option 1 described above, both the SBFD PRACH resource and the non SBFD PRACH resource configured by the non SBFD-related RACH configuration are valid. Based on the assumption of Option 2, the non SBFD PRACH resource configured by the non SBFD-related RACH configuration (i.e., the PRACH resource of Type 1), the SBFD PRACH resource configured by the SBFD-related RACH configuration (i.e., PRACH resources of Type 4) and the non SBFD PRACH resource (i.e., the PRACH resource of Type 3) are valid. Among the plurality of valid PRACH resources, how the terminal device to determine the PRACH resource used when sending the PRACH is an urgent problem to be solved.

Based on this, the embodiments of the present disclosure provide a random access method. Herein, a terminal device may receive a first RACH configuration and/or a second RACH configuration, and the first RACH configuration and/or the second RACH configuration is/are used to configure a plurality of types of PRACH resources; and may send a PRACH on a target PRACH resource, and the target PRACH resource is one of the plurality of types of PRACH resources configured by the first RACH configuration and/or the second RACH configuration. In such way, the terminal device can select the target PRACH resource among the plurality of types of PRACH resources configured by a network device to send the PRACH. Thus, the reliability of the random access can be ensured, the conflict of random access contention between different terminal devices can be reduced, and the success rate of the random access can be improved.

In order to facilitate understanding of the technical solutions of the embodiments of the present disclosure, the technical solutions of the present disclosure are described in detail below through specific embodiments. The above related technologies can be combined with the technical solutions of the embodiments of the present disclosure as optional solutions in any combination, and all of them fall within the protection scope of the embodiments of the present disclosure. The embodiments of the present disclosure include at least some of the following.

FIG. 7 is a schematic flowchart of a random access method according to an embodiment of the present disclosure. As shown in FIG. 7, the method includes the following operations.

At block S710, a network device sends a first RACH configuration and/or a second RACH configuration to a terminal device. The first RACH configuration and/or the second RACH configuration is/are used to configure a plurality of types of PRACH resources.

At block S720, the terminal device sends a PRACH to the network device on a target PRACH resource. The target PRACH resource is one of the plurality of types of PRACH resources configured by the first RACH configuration and/or the second RACH configuration.

Accordingly, the terminal device may receive the first RACH configuration and/or the second RACH configuration sent by the network device.

Accordingly, the network device may receive the PRACH sent by the terminal device on the target PRACH resource.

Exemplarily, the terminal device may be a terminal device that is aware of SBFD. For example, the terminal device may be an SBFD-Aware UE.

In some embodiments, the first RACH configuration is a non SBFD-related RACH configuration and the second RACH configuration is an SBFD-related RACH configuration.

It should be noted that the non SBFD-related RACH configuration may also be referred to as a Legacy RACH configuration, and the SBFD-related RACH configuration may also be referred to as an Additional RACH configuration. The non SBFD-related RACH configuration may be used to configure a non SBFD PRACH resource and/or an SBFD PRACH resource, and the SBFD-related RACH configuration may also be used to configure the non SBFD PRACH resource and/or the SBFD PRACH resource.

Furthermore, the non SBFD PRACH resource may also be referred to as a Legacy PRACH resource, a Legacy RO, a RO in a UL symbol and/or a Flexible symbol, or an RO that satisfies a validity condition in the related art. The SBFD PRACH resource may also be referred to as an SBFD RO, or an RO in a DL symbol and/or in a Flexible symbol configured with the SBFD subband.

Based on Option 1 and Option 2 in the foregoing embodiments, the operation of the network device sending the first RACH configuration and/or the second RACH configuration to the terminal device, which may include: the network device sends the first RACH configuration to the terminal device (corresponding to Option 1); or, the network device sends the first RACH configuration and the second RACH configuration to the terminal device (corresponding to Option 2). Based on different types of RACH configurations sent by network device, the target PRACH resource may be determined in two manners.

Manner#A (corresponding to Option 1): the network device sends the first RACH configuration to the terminal device, the first RACH configuration is used to configure the first PRACH resource and the second PRACH resource; and the target PRACH resource is the first PRACH resource or the second PRACH resource.

According to this manner, the terminal device may select the target PRACH resource from the first PRACH resource or the second PRACH resource configured by the network device, to send the PRACH. In such way, the reliability of random access can be ensured, the conflict of random access contention between different terminal devices can be reduced, and the success rate of the random access can be improved.

Manner#B (corresponding to Option 2): the network device sends the first RACH configuration and the second RACH configuration to the terminal device, the first RACH configuration is used to configure a third PRACH resource; and the second RACH configuration is used to configure the first PRACH resource and/or the second PRACH resource. The target PRACH resource is one of the plurality of types of PRACH resources configured by the first RACH configuration and the second RACH configuration.

Exemplarily, the first PRACH resource and the third PRACH resource are non SBFD PRACH resources, and the second PRACH resource and the fourth PRACH resource mentioned in the subsequent embodiments are SBFD PRACH resources.

It should be understood that, in the embodiments of the present disclosure, the first PRACH resource may be the first PRACH resource configured by the first RACH configuration in Option 1, or the first PRACH resource configured by the second RACH configuration in Option 2. The second PRACH resource may be the second PRACH resource configured by the first RACH configuration in Option 1, or may be the second PRACH resource configured by the second RACH configuration in Option 2.

According to this manner, the terminal device can select the target PRACH resource from the plurality of types of PRACH resources configured by the network device to send the PRACH. In such way, the reliability of random access can be ensured, the conflict of random access contention between different terminal devices can be reduced, and the success rate of random access can be improved.

Based on Manner#B, the second RACH configuration may configure different types of PRACH resources, and at this time, the target PRACH resource may be determined in the following manners.

Manner#B1: the first RACH configuration is used to configure the third PRACH resource; the second RACH configuration is used to configure the second PRACH resource; and the target PRACH resource is the third PRACH resource or the second PRACH resource.

According to this manner, the terminal device may select the target PRACH resource from the third PRACH resource or the second PRACH resource configured by the network device to send the PRACH. In such way, the reliability of random access can be ensured, the conflict of random access contention between different terminal devices can be reduced, and the success rate of random access can be improved.

Manner#B2: the first RACH configuration is used to configure the third PRACH resource; the second RACH configuration is used to configure the first PRACH resource and the second PRACH resource; and the target PRACH resource is one of the third PRACH resource, the first PRACH resource and the second PRACH resource.

According to this manner, the terminal device may select the target PRACH resource among the third PRACH resource, the first PRACH resource and the second PRACH resource configured by the network device to send the PRACH. In such way, the reliability of random access can be ensured, the conflict of random access contention between different terminal devices can be reduced, and the success rate of random access can be improved.

Based on Manner#B2, the target PRACH resource may be determined in the following manners.

Manner#B21: the network device may send the second information to the terminal device. Herein, the second information is used to indicate priorities of the first PRACH resource, the second PRACH resource and the third PRACH resource. The target PRACH resource is the PRACH resource having the highest priority among the first PRACH resource, the second PRACH resource and the third PRACH resource. Alternatively, the second information is used to instruct the terminal device to select one of the first PRACH resource, the second PRACH resource and the third PRACH resource as the target PRACH resource.

Accordingly, the terminal device may receive the second information sent by the network device.

According to this manner, the network device can directly configure priorities for the three types of PRACH resources in the same dimension without distinguishing the type of RACH configuration, thus making the selection of the target PRACH resource simpler and improving the efficiency of determining the target PRACH resource.

Manner#B22: the target PRACH resource is specified in a protocol or configured by the network device, and the target PRACH resource is the first PRACH resource or the second PRACH resource.

That is, the target PRACH resource is the PRACH resource configured by the second RACH configuration; and further, the target PRACH resource may be the first PRACH resource or the second PRACH resource.

According to this manner, when selecting the target PRACH resource, the selection of the RACH configuration can be carried out first, so that the types of RACH configurations can be reduced, the complexity of selecting different types of RACH configurations by the terminal device can be reduced, and the realization of the terminal device/network device can be simplified.

The embodiments of the present disclosure provide the random access method, where the terminal device can receive the first RACH configuration and/or the second RACH configuration, where the first RACH configuration and/or the second RACH configuration is/are used to configure the plurality of types of PRACH resources; and the terminal device can send the PRACH on the target PRACH resource, where the target PRACH resource is one of the plurality of types of PRACH resources configured by the first RACH configuration and/or the second RACH configuration. In such way, the terminal device may select the target PRACH resource among the plurality of types of PRACH resources configured by the network device to send the PRACH. Thus, the reliability of random access can be ensured, the conflict of random access contention between different terminal devices can be reduced, and the success rate of random access can be improved.

According to Manner#A and Manner#B22, the target PRACH resource is the first PRACH resource or the second PRACH resource. The determination of the target PRACH resource among the first PRACH resource and the second PRACH resource may be implemented in several possible ways.

In one possible implementation, the target PRACH resource is specified in the protocol, and the target PRACH resource is the second PRACH resource.

According to this manner, since certain types of terminal devices (such as non SBFD-aware UEs) cannot send the PRACH on the second PRACH resource, other types of terminal devices (such as SBFD-Aware UEs) preferentially select the second PRACH resource as the target PRACH resource; and thus, the probability that the first PRACH resource collides with the certain types of terminal devices can be reduced. In addition, the network device can also be enabled to identify the type of the terminal device (e.g., the terminal device is the SBFD-Aware UE) by receiving the PRACH on the second PRACH resource, so that the network device can guide the scheduling of the subsequent operations of the random access.

In another possible implementation, the network device sends the first information to the terminal device. Herein, the first information is used to indicate the priorities of the first PRACH resource and the second PRACH resource, and the target PRACH resource is the PRACH resource having the highest priority among the first PRACH resource and the second PRACH resource; or, the first information is used to instruct the terminal device to select the first PRACH resource or the second PRACH resource as the target PRACH resource.

Accordingly, the terminal device may receive the first information sent by the network device.

According to this manner, the network device can indicate the target PRACH resource selected by the terminal device according to different situations of different terminal devices. For example, in a case where the terminal device is located at the center of the cell, the network device may instruct the terminal device to send the PRACH using the second PRACH resource to achieve the purpose of reducing collisions on the first PRACH resource. When the terminal device is located at the edge of the cell, the network device may instruct the terminal device to send the PRACH using the first PRACH resource to avoid excessive Cross Link Interference (CLI) to the uplink transmission of the uplink subband due to the excessive PRACH transmission power of the second PRACH resource. In addition, the effect of load balancing can be obtained by the network device indicating the target PRACH resource selected by the terminal device.

In another possible implementation, the target PRACH resource is determined based on one or more of the following:
a received power or energy of a first reference signal;
a path loss corresponding to the first reference signal;
a cross-link interference level measured by the terminal device; and
a frequency domain location of the second PRACH resource.

It should be note that the first reference signal may be associated with the PRACH.

Exemplarily, the first reference signal may be an SSB, a CSI-RS, or the like, which is not limited in the embodiments of the present disclosure.

In some embodiments, in a case where the received power or energy of the first Reference Signal (RS) is greater than or equal to a first threshold, the target PRACH resource is the second PRACH resource; and/or, in a case where the received power or energy of the first reference signal is less than or equal to the first threshold, the target PRACH resource is the first PRACH resource.

It should be noted that the first threshold may be specified in the protocol or configured by the network side, or may be set in another manner, which is not limited in the embodiments of the present disclosure.

It should also be noted that the first threshold may be a critical value, and in a case where the received power or energy of the first reference signal is equal to the first threshold, the target PRACH resource may be the first PRACH resource or the second PRACH resource, which is not limited in the embodiments of the present disclosure.

Exemplarily, in a case where the received power or energy of the first reference signal is greater than or equal to the first threshold, the target PRACH resource is the second PRACH resource; and/or, in a case where the received power or energy of the first reference signal is less than the first threshold, the target PRACH resource is the first PRACH resource.

Exemplarily, in a case where the received power or energy of the first reference signal is greater than the first threshold, the target PRACH resource is the second PRACH resource; and/or in a case where the received power or energy of the first reference signal is less than or equal to the first threshold, the target PRACH resource is the first PRACH resource.

Through the method, in a case where the received power or energy of the first reference signal is high (e.g., greater than the first threshold), the terminal device may be at a relatively central position of the cell, and the power used by the terminal device to send the PRACH is also low at this time, so that the transmission of the PRACH by using the second PRACH resource does not generate a significant CLI. In a case where the received power or energy of the first reference signal is low (e.g., less than the first threshold), the terminal device may be at a relatively edge position of the cell, and the power used by the terminal device to send the PRACH is also high at this time, so that the PRACH is sent by using the first PRACH resource to avoid generating the significant CLI.

In some embodiments, in a case where the path loss corresponding to the first reference signal is less than or equal to the second threshold, the target PRACH resource is the second PRACH resource; and/or, in a case where the path loss corresponding to the first reference signal is greater than or equal to the second threshold, the target PRACH resource is the first PRACH resource.

It should be noted that the second threshold may be specified in the protocol or configured by the network device side, or may be set in another manner, which is not limited in the embodiments of the present disclosure.

It should also be noted that the second threshold may be a critical value, and in a case where the path loss corresponding to the first reference signal is equal to the second threshold, the target PRACH resource may be the first PRACH resource or the second PRACH resource, which is not limited in the embodiments of the present disclosure.

Exemplarily, in a case where the path loss corresponding to the first reference signal is less than or equal to the second threshold, the target PRACH resource is the second PRACH resource; and/or, in a case where the path loss corresponding to the first reference signal is greater than the second threshold, the target PRACH resource is the first PRACH resource.

Exemplarily, in a case where the path loss corresponding to the first reference signal is less than the second threshold, the target PRACH resource is the second PRACH resource; and/or, in a case where the path loss corresponding to the first reference signal is greater than or equal to the second threshold, the target PRACH resource is the first PRACH resource.

Through the method, in a case where the path loss corresponding to the first reference signal is low (e.g., less than the second threshold), the terminal device may be at the relatively central position of the cell, and the power used by the terminal device to send the PRACH is also low at this time, so that the transmission of the PRACH by using the second PRACH resource does not generate a significant CLI. In a case where the path loss corresponding to the first reference signal is high (e.g., greater than the second threshold), the terminal device may be at the relatively edge position of the cell, and the power used by the terminal device to send the PRACH is also high at this time, so that the PRACH is sent by using the first PRACH resource to avoid generating the significant CLI.

In some embodiments, in a case where the cross-link interference (CLI) measured by the terminal device is less than or equal to a third threshold, the target PRACH resource is the second PRACH resource; and/or, in a case where the cross-link interference (CLI) measured by the terminal device is greater than or equal to the third threshold, the target PRACH resource is the first PRACH resource.

It should be noted that the third threshold may be specified in the protocol or configured by the network device side, or may be set in another manner, which is not limited in the embodiments of the present disclosure.

It should also be noted that the third threshold may be a critical value, and in a case where the CLI measured by the terminal device is equal to the third threshold, the target PRACH resource may be the first PRACH resource or the second PRACH resource, which is not limited in the embodiments of the present disclosure.

Exemplarily, in a case where the CLI measured by the terminal device is less than or equal to the third threshold, the target PRACH resource is the second PRACH resource; and/or, in a case where the CLI measured by the terminal device is greater than the third threshold, the target PRACH resource is the first PRACH resource.

Exemplarily, in a case where the CLI measured by the terminal device is less than the third threshold, the target PRACH resource is the second PRACH resource; and/or, in a case where the CLI measured by the terminal device is greater than or equal to the third threshold, the target PRACH resource is the first PRACH resource.

Through the method, in a case where the CLI measured by the terminal device is low (e.g., less than the third threshold), the transmission of the PRACH by using the second PRACH resource does not generate a significant CLI. In a case where the CLI measured by the terminal device is high (e.g., greater than the third threshold), the PRACH is sent by using the first PRACH resource to avoid generating a more significant CLI.

In some embodiments, in a case where the frequency domain offset between the second PRACH resource and a boundary of a downlink subband is greater than or equal to a fourth threshold, the target PRACH resource is the second PRACH resource; and/or, in a case where the frequency domain offset between the second PRACH resource and the boundary of the downlink subband is less than or equal to the fourth threshold, the target PRACH resource is the first PRACH resource.

Herein, the downlink subband refers to a continuous segment of downlink frequency domain resources, the downlink subband is located in an SBFD symbol (slot), and the SBFD symbol is a DL symbol and/or Flexible symbol configured with an uplink subband and/or a downlink subband.

It should be noted that the fourth threshold may be specified in the protocol or configured by the network device side, or may be set in another manner, which is not limited in the embodiments of the present disclosure.

It should also be noted that the fourth threshold may be a critical value, and in a case where the frequency domain offset between the second PRACH resource and the boundary of the downlink subband is equal to the fourth threshold, the target PRACH resource may be the first PRACH resource or the second PRACH resource, which is not limited in the embodiments of the present disclosure.

Exemplarily, in a case where the frequency domain offset between the second PRACH resource and the boundary of the downlink subband is greater than or equal to the fourth threshold, the target PRACH resource is the second PRACH resource; and/or, in a case where the frequency domain offset between the second PRACH resource and the boundary of the downlink subband is less than the fourth threshold, the target PRACH resource is the first PRACH resource.

Exemplarily, in a case where the frequency domain offset between the second PRACH resource and the boundary of the downlink subband is greater than the fourth threshold, the target PRACH resource is the second PRACH resource; and/or, in a case where the frequency domain offset between the second PRACH resource and the boundary of the downlink subband is less than or equal to the fourth threshold, the target PRACH resource is the first PRACH resource.

Furthermore, in some embodiments, the frequency domain offset between the second PRACH resource and the boundary of the downlink subband includes one or more of the following:
a frequency domain offset between a starting position of the second PRACH resource and a starting position of the downlink subband;
a frequency domain offset between an end position of the second PRACH resource and an end position of the downlink subband;
a frequency domain offset between the starting position of the second PRACH resource and the end position of the downlink subband; and
a frequency domain offset between the end position of the second PRACH resource and the starting position of the downlink subband.

Through to the method, in a case where the frequency domain offset between the second PRACH resource and the boundary of the downlink subband is greater than or equal to the fourth threshold, the CLI generated by the second PRACH resource to the downlink subband is low, and the significant CLI is not generated even when the PRACH is sent by using the second PRACH resource. In a case where the frequency domain offset between the second PRACH resource and the boundary of the downlink subband is less than or equal to the fourth threshold, the CLI generated by the second PRACH resource to the downlink subband is high, and the PRACH is sent by using the first PRACH resource to avoid generating a more significant CLI.

In another possible implementation, the target PRACH resource is determined based on the first preset condition. Herein, the first preset condition includes: whether the first PRACH resource and/or the second PRACH resource exist in a first time window after a random access procedure is initiated.

It should be noted that the first time window may be specified in the protocol or configured by the network device, or may be set in another manner, which is not limited in the embodiments of the present disclosure.

Furthermore, in some embodiments, in a case where the first PRACH resource and the second PRACH resource exist, the target PRACH resource is the second PRACH resource; and/or, in a case where the first PRACH resource exists and the second PRACH resource does not exist, the target PRACH resource is the first PRACH resource; and/or, in a case where the second PRACH resource exists and the first PRACH resource does not exist, the target PRACH resource is the second PRACH resource.

That is, in a case where the first PRACH resource and the second PRACH resource exist, the target PRACH resource is the second PRACH resource; and/or, in a case where only the first PRACH resource exists, the target PRACH resource is the first PRACH resource; and/or, in a case where only the second PRACH resource exists, the target PRACH resource is the second PRACH resource.

Through the method, based on the introduction of the first time window, the second PRACH resource can be selected as the target PRACH resource within a certain delay range, thus not only reducing the conflict with the first PRACH resource, but also ensuring the delay requirement.

In another possible implementation, the network device may send first information to the terminal device, and the target PRACH resource may be determined based on the first information and one or more of the following:
a received power or energy of the first reference signal;
a path loss corresponding to the first reference signal;
a cross-link interference level measured by the terminal device; and
a frequency domain location of the second PRACH resource.

Herein, the first information is used to indicate priorities of the first PRACH resource and the second PRACH resource; or, the first information is used to instruct the terminal device to select the first PRACH resource or the second PRACH resource as the target PRACH resource.

Accordingly, the terminal device may receive the first information sent by the network device.

In some embodiments, the target PRACH resource may be determined based on the first information and the received power or energy of the first reference signal.

Exemplarily, in a case where the first information indicates that the priority of the second PRACH resource is higher than the priority of the first PRACH resource, if the received power or energy of the first reference signal is greater than or equal to the first threshold, the target PRACH resource is the second PRACH resource; and if the received power or energy of the first reference signal is less than or equal to the first threshold, the target PRACH resource is the first PRACH resource.

Exemplarily, in a case where the first information instructs the terminal device to select the first PRACH resource as the target PRACH resource, if the received power or energy of the first reference signal is less than or equal to the first threshold, the target PRACH resource is the first PRACH resource; and if the received power or energy of the first reference signal is greater than or equal to the first threshold, the target PRACH resource is the second PRACH resource.

In some embodiments, the target PRACH resource may be determined based on the first information and the path loss corresponding to the first reference signal.

Exemplarily, in a case where the first information indicates that the priority of the second PRACH resource is higher than the priority of the first PRACH resource, if the path loss corresponding to the first reference signal is less than or equal to the second threshold, the target PRACH resource is the second PRACH resource; and if the path loss corresponding to the first reference signal is greater than or equal to the second threshold, the target PRACH resource is the first PRACH resource.

Exemplarily, in a case where the first information instructs the terminal device to select the first PRACH resource as the target PRACH resource, if the path loss corresponding to the first reference signal is greater than or equal to the second threshold, the target PRACH resource is the first PRACH resource; and if the path loss corresponding to the first reference signal is less than or equal to the second threshold, the target PRACH resource is the second PRACH resource.

In some embodiments, the target PRACH resource may be determined based on the first information and the cross-link interference level measured by the terminal device.

Exemplarily, in a case where the first information indicates that the priority of the second PRACH resource is higher than the priority of the first PRACH resource, if the CLI measured by the terminal device is less than or equal to the third threshold, the target PRACH resource is the second PRACH resource; and if the CLI measured by the terminal device is greater than or equal to the third threshold, the target PRACH resource is the first PRACH resource.

Exemplarily, in a case where the first information instructs the terminal device to select the first PRACH resource as the target PRACH resource, if the CLI measured by the terminal device is greater than or equal to the third threshold, the target PRACH resource is the first PRACH resource; and if the CLI measured by the terminal device is less than or equal to the third threshold, the target PRACH resource is the second PRACH resource.

In some embodiments, the target PRACH resource may be determined based on the first information and the frequency domain location of the second PRACH resource.

Exemplarily, in a case where the first information indicates that the priority of the second PRACH resource is higher than the priority of the first PRACH resource, if the frequency domain offset between the second PRACH resource and the boundary of the downlink subband is greater than or equal to the fourth threshold, the target PRACH resource is the second PRACH resource; and if the frequency domain offset between the second PRACH resource and the boundary of the downlink subband is less than or equal to the fourth threshold, the target PRACH resource is the first PRACH resource.

For example, in a case where the first information instructs the terminal device to select the first PRACH resource as the target PRACH resource, if the frequency domain offset between the second PRACH resource and the boundary of the downlink subband is less than or equal to the fourth threshold, the target PRACH resource is the first PRACH resource; and if the frequency domain offset between the second PRACH resource and the boundary of the downlink subband is greater than or equal to the fourth threshold, the target PRACH resource is the second PRACH resource.

In another possible implementation, the network device may send the first information to the terminal device, and the target PRACH resource may be determined based on the first information and the first preset condition. Herein, the first information is used to indicate the priorites of the first PRACH resource and the second PRACH resource; or, the first information is used to instruct the terminal device to select the first PRACH resource or the second PRACH resource as the target PRACH resource. The first preset condition includes whether the first PRACH resource and/or the second PRACH resource exist within the first time window after the random access procedure is initiated.

Accordingly, the terminal device may receive the first information sent by the network device.

Exemplarily, in a case where the first information indicates that the priority of the second PRACH resource is higher than the priority of the first PRACH resource, if the first PRACH resource and the second PRACH resource exist within the first time window, the target PRACH resource is the second PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the first PRACH resource and the second PRACH resource exist within the first time window, the target PRACH resource is the first PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

In another possible implementation, the target PRACH resource is determined based on the first preset condition and one or more of the following:
a received power or energy of a first reference signal;
a path loss corresponding to the first reference signal;
a cross-link interference level measured by the terminal device; and
a frequency domain location of the second PRACH resource.

Herein, the first preset condition includes whether the first PRACH resource and/or the second PRACH resource exist within the first time window after the random access procedure is initiated.

In some embodiments, the target PRACH resource may be determined based on the first preset condition and the received power or energy of the first reference signal.

Exemplarily, in a case where the received power or energy of the first reference signal is greater than or equal to the first threshold, if the first PRACH resource and the second PRACH resource exist within the first time window, the target PRACH resource is the second PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

Exemplarily, in a case where the received power or energy of the first reference signal is less than or equal to the first threshold, if the first PRACH resource and the second PRACH resource exist within the first time window, the target PRACH resource is the first PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

In some embodiments, the target PRACH resource may be determined based on the first preset condition and the path loss corresponding to the first reference signal.

Exemplarily, in a case where the path loss corresponding to the first reference signal is less than or equal to the second threshold, if the first PRACH resource and the second PRACH resource exist within the first time window, the target PRACH resource is the second PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

Exemplarily, in a case where the path loss corresponding to the first reference signal is greater than or equal to the second threshold, if the first PRACH resource and the second PRACH resource exist within the first time window, the target PRACH resource is the first PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

In some embodiments, the target PRACH resource may be determined based on the first preset condition and the cross-link interference level measured by the terminal device.

Exemplarily, in a case where the CLI measured by the terminal device is less than or equal to the third threshold, if the first PRACH resource and the second PRACH resource exist within the first time window, the target PRACH resource is the second PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

Exemplarily, in a case where the CLI measured by the terminal device is greater than or equal to the third threshold, if the first PRACH resource and the second PRACH resource exist within the first time window, the target PRACH resource is the first PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

In some embodiments, the target PRACH resource may be determined based on the first preset condition and the frequency domain location of the second PRACH resource.

Exemplarily, in a case where the frequency domain offset between the second PRACH resource and the boundary of the downlink subband is greater than or equal to the fourth threshold, if the first PRACH resource and the second PRACH resource exist within the first time window, the target PRACH resource is the second PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

Exemplarily, in a case where the frequency domain offset between the second PRACH resource and the boundary of the downlink subband is less than or equal to the fourth threshold, if the first PRACH resource and the second PRACH resource exist within the first time window, the target PRACH resource is the first PRACH resource; if the first PRACH resource exists and the second PRACH resource does not exist within the first time window, the target PRACH resource is the first PRACH resource; and if the second PRACH resource exists and the first PRACH resource does not exist within the first time window, the target PRACH resource is the second PRACH resource.

In another possible implementation, the network device may send the first information to the terminal device, and the target PRACH resource may be determined based on the first information, the first preset condition and one or more of the following:
a received power or energy of the first reference signal;
a path loss corresponding to the first reference signal;
a cross-link interference level measured by the terminal device; and
a frequency domain location of the second PRACH resource.

Herein, the first information is used to indicate priorities of the first PRACH resource and the second PRACH resource; or, the first information is used to instruct the terminal device to select the first PRACH resource or the second PRACH resource as the target PRACH resource. The first preset condition includes whether the first PRACH resource and/or the second PRACH resource exist within the first time window after the random access procedure is initiated.

Accordingly, the terminal device may receive the first information sent by the network device.

In some embodiments, the target PRACH resource may be determined based on the first information, the first preset condition and the received power or energy of the first reference signal.

Exemplarily, in a case where the first information indicates that the priority of the second PRACH resource is higher than the priority of the first PRACH resource, if the received power or energy of the first reference signal is greater than or equal to the first threshold, and the first PRACH resource and the second PRACH resource exist within the first time window, the target PRACH resource is the second PRACH resource; if the received power or energy of the first reference signal is greater than or equal to the first threshold, and the first PRACH resource exists and the second PRACH resource does not exist within the first time window, the target PRACH resource is the first PRACH resource; and if the received power or energy of the first reference signal is greater than or equal to the first threshold, and the second PRACH resource exists and the first PRACH resource does not exist within the first time window, the target PRACH resource is the second PRACH resource.

Exemplarily, in a case where the first information indicates that the priority of the second PRACH resource is higher than the priority of the first PRACH resource, if the received power or energy of the first reference signal is less than or equal to the first threshold, and the first PRACH resource and the second PRACH resource exist within the first time window, the target PRACH resource is the first PRACH resource; if the received power or energy of the first reference signal is less than or equal to the first threshold, and the first PRACH resource exists and the second PRACH resource does not exist within the first time window, the target PRACH resource is the first PRACH resource; and if the received power or energy of the first reference signal is less than or equal to the first threshold, and the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the received power or energy of the first reference signal is less than or equal to the first threshold, and the first PRACH resource and the second PRACH resource exist within the first time window, the target PRACH resource is the first PRACH resource; if the received power or energy of the first reference signal is less than or equal to the first threshold, and the first PRACH resource exists and the second PRACH resource does not exist within the first time window, the target PRACH resource is the first PRACH resource; and if the received power or energy of the first reference signal is less than or equal to the first threshold, and the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the received power or energy of the first reference signal is greater than or equal to the first threshold, and the first PRACH resource and the second PRACH resource exist within the first time window, the target PRACH resource is the second PRACH resource; if the received power or energy of the first reference signal is greater than or equal to the first threshold, and the first PRACH resource exists and the second PRACH resource does not exist within the first time window, the target PRACH resource is the first PRACH resource; and if the received power or energy of the first reference signal is greater than or equal to the first threshold, and the second PRACH resource exists and the first PRACH resource does not exist within the first time window, the target PRACH resource is the second PRACH resource.

In some embodiments, the target PRACH resource may be determined based on the first information, the first preset condition and the path loss corresponding to the first reference signal.

Exemplarily, in a case where the first information indicates that the priority of the second PRACH resource is higher than the priority of the first PRACH resource, if the path loss corresponding to the first reference signal is less than or equal to the second threshold, and the first PRACH resource and the second PRACH resource exist within the first time window, the target PRACH resource is the second PRACH resource; if the path loss corresponding to the first reference signal is less than or equal to the second threshold, and the first PRACH resource exists and the second PRACH resource does not exist within the first time window, the target PRACH resource is the first PRACH resource; and if the path loss corresponding to the first reference signal is less than or equal to the second threshold, and the second PRACH resource exists and the first PRACH resource does not exist within the first time window, the target PRACH resource is the second PRACH resource.

Exemplarily, in a case where the first information indicates that the priority of the second PRACH resource is higher than the priority of the first PRACH resource, if the path loss corresponding to the first reference signal is greater than or equal to the second threshold, and the first PRACH resource and the second PRACH resource exist within the first time window, the target PRACH resource is the first PRACH resource; if the path loss corresponding to the first reference signal is greater than or equal to the second threshold, and the first PRACH resource exists and the second PRACH resource does not exist within the first time window, the target PRACH resource is the first PRACH resource; and if the path loss corresponding to the first reference signal is greater than or equal to the second threshold, and the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the path loss corresponding to the first reference signal is greater than or equal to the second threshold, and the first PRACH resource and the second PRACH resource exist within the first time window, the target PRACH resource is the first PRACH resource; if the path loss corresponding to the first reference signal is greater than or equal to the second threshold, and the first PRACH resource exists and the second PRACH resource does not exist within the first time window, the target PRACH resource is the first PRACH resource; and if the path loss corresponding to the first reference signal is greater than or equal to the second threshold, and the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the path loss corresponding to the first reference signal is less than or equal to the second threshold, and the first PRACH resource and the second PRACH resource exist within the first time window, the target PRACH resource is the second PRACH resource; if the path loss corresponding to the first reference signal is less than or equal to the second threshold, and the first PRACH resource exists and the second PRACH resource does not exist within the first time window, the target PRACH resource is the first PRACH resource; and if the path loss corresponding to the first reference signal is less than or equal to the second threshold, and the second PRACH resource exists and the first PRACH resource does not exist within the first time window, the target PRACH resource is the second PRACH resource.

In some embodiments, the target PRACH resource may be determined based on the first information, the first preset condition and the cross-link interference level measured by the terminal device.

Exemplarily, in a case where the first information indicates that the priority of the second PRACH resource is higher than the priority of the first PRACH resource, if the CLI measured by the terminal device is less than or equal to the third threshold, and the first PRACH resource and the second PRACH resource exist within the first time window, the target PRACH resource is the second PRACH resource; if the CLI measured by the terminal device is less than or equal to the third threshold, and the first PRACH resource exists and the second PRACH resource does not exist within the first time window, the target PRACH resource is the first PRACH resource; and if the CLI measured by the terminal device is less than or equal to the third threshold, and the second PRACH resource exists and the first PRACH resource does not exist within the first time window, the target PRACH resource is the second PRACH resource.

Exemplarily, in a case where the first information indicates that the priority of the second PRACH resource is higher than the priority of the first PRACH resource, if the CLI measured by the terminal device is greater than or equal to the third threshold, and the first PRACH resource and the second PRACH resource exist within the first time window, the target PRACH resource is the first PRACH resource; if the CLI measured by the terminal device is greater than or equal to the third threshold, and the first PRACH resource exists and the second PRACH resource does not exist within the first time window, the target PRACH resource is the first PRACH resource; and if the CLI measured by the terminal device is greater than or equal to the third threshold, and the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the CLI measured by the terminal device is greater than or equal to the third threshold, and the first PRACH resource and the second PRACH resource exist within the first time window, the target PRACH resource is the first PRACH resource; if the CLI measured by the terminal device is greater than or equal to the third threshold, and the first PRACH resource exists and the second PRACH resource does not exist within the first time window, the target PRACH resource is the first PRACH resource; and if the CLI measured by the terminal device is greater than or equal to the third threshold, and the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the CLI measured by the terminal device is less than or equal to the third threshold, and the first PRACH resource and the second PRACH resource exist within the first time window, the target PRACH resource is the second PRACH resource; if the CLI measured by the terminal device is less than or equal to the third threshold, and the first PRACH resource exists and the second PRACH resource does not exist within the first time window, the target PRACH resource is the first PRACH resource; and if the CLI measured by the terminal device is less than or equal to the third threshold, and the second PRACH resource exists and the first PRACH resource does not exist within the first time window, the target PRACH resource is the second PRACH resource.

In some embodiments, the target PRACH resource may be determined based on the first information, the first preset condition and the frequency domain location of the second PRACH resource.

Exemplarily, in a case where the first information indicates that the priority of the second PRACH resource is higher than the priority of the first PRACH resource, if the frequency domain offset between the second PRACH resource and the boundary of the downlink subband is greater than or equal to the fourth threshold, and the first PRACH resource and the second PRACH resource exist within the first time window, the target PRACH resource is the second PRACH resource; if the frequency domain offset between the second PRACH resource and the boundary of the downlink subband is greater than or equal to the fourth threshold, and the first PRACH resource exists and the second PRACH resource does not exist within the first time window, the target PRACH resource is the first PRACH resource; and if the frequency domain offset between the second PRACH resource and the boundary of the downlink subband is greater than or equal to the fourth threshold, and the second PRACH resource exists and the first PRACH resource does not exist within the first time window, the target PRACH resource is the second PRACH resource.

Exemplarily, in a case where the first information indicates that the priority of the second PRACH resource is higher than the priority of the first PRACH resource, if the frequency domain offset between the second PRACH resource and the boundary of the downlink subband is less than or equal to the fourth threshold, and the first PRACH resource and the second PRACH resource exist within the first time window, the target PRACH resource is the first PRACH resource; if the frequency domain offset between the second PRACH resource and the boundary of the downlink subband is less than or equal to the fourth threshold, and the first PRACH resource exists and the second PRACH resource does not exist within the first time window, the target PRACH resource is the first PRACH resource; and if the frequency domain offset between the second PRACH resource and the boundary of the downlink subband is less than or equal to the fourth threshold, and the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the frequency domain offset between the second PRACH resource and the boundary of the downlink subband is less than or equal to the fourth threshold, and the first PRACH resource and the second PRACH resource exist within the first time window, the target PRACH resource is the first PRACH resource; if the frequency domain offset between the second PRACH resource and the boundary of the downlink subband is less than or equal to the fourth threshold, and the first PRACH resource exists and the second PRACH resource does not exist within the first time window, the target PRACH resource is the first PRACH resource; and if the frequency domain offset between the second PRACH resource and the boundary of the downlink subband is less than or equal to the fourth threshold, and the second PRACH resource exists and the first PRACH resource does not exist within the first time window, the target PRACH resource is the second PRACH resource.

Exemplarily, in a case where the first information instructs the terminal device to select the first PRACH resource as the target PRACH resource, if the frequency domain offset between the second PRACH resource and the boundary of the downlink subband is greater than or equal to the fourth threshold, and the first PRACH resource and the second PRACH resource exist within the first time window, the target PRACH resource is the second PRACH resource; if the frequency domain offset between the second PRACH resource and the boundary of the downlink subband is greater than or equal to the fourth threshold, and the first PRACH resource exists and the second PRACH resource does not exist within the first time window, the target PRACH resource is the first PRACH resource; and if the frequency domain offset between the second PRACH resource and the boundary of the downlink subband is greater than or equal to the fourth threshold, and the second PRACH resource exists and the first PRACH resource does not exist within the first time window, the target PRACH resource is the second PRACH resource.

Based on the above Manner#B1, the target PRACH resource is the third PRACH resource or the second PRACH resource. The manner of determining the target PRACH resource among the third PRACH resource and the second PRACH resource may be similar to the manner of determining the target PRACH resource among the first PRACH resource and the second PRACH resource, or may be similar to the manner of preferentially selecting the first RACH configuration or the second RACH configuration.

Exemplarily, the target PRACH resource is specified in the protocol, and the target PRACH resource is the second PRACH resource. That is, the second PRACH resource configured by the second RACH configuration may be preferentially selected as the target PRACH resource.

Exemplarily, the network device indicates the priorities of the third PRACH resource and the second PRACH resource, and the target PRACH resource is the PRACH resource having the highest priority among the third PRACH resource and the second PRACH resource; or, the network device instructs the terminal device to select the third PRACH resource or the second PRACH resource as the target PRACH resource.

It should be noted that, for another manner of determining the target PRACH resource among the third PRACH resource and the second PRACH resource, reference may be made to the descriptions in the foregoing embodiments, which will not be repeated herein.

Through the method, the terminal device may select the target PRACH resource from the third PRACH resource or the second PRACH resource configured by the network device to send the PRACH. In such way, the reliability of the random access can be ensured, the conflict of random access contention between different terminal devices can be reduced, and the success rate of random access can be improved.

Based on the above Manner#B21, the manner of determining the target PRACH resource based on the second information may be as follows.

In one possible implementation, in a case where the first PRACH resource, the second PRACH resource and the third PRACH resource are all valid, the target PRACH resource may be determined directly based on the second information.

Exemplarily, in a case where the first PRACH resource, the second PRACH resource and the third PRACH resource are all valid, if the second information indicates that the second PRACH resource has the highest priority, the target PRACH resource is the second PRACH resource; if the second information instructs the terminal device to select the first PRACH resource, the target PRACH resource is the first PRACH resource; and if the second information instructs the terminal device to select the third PRACH resource, the target PRACH resource is the third PRACH resource.

Through the method, the network device can directly prioritize three types of PRACH resources in the same dimension without distinguishing the type of RACH configuration, thus making the selection of the target PRACH resource simpler and improving the efficiency of determining the target PRACH resource.

In another possible implementation, one or more of the first PRACH resource, the second PRACH resource and the third PRACH resource are valid under certain conditions. The terminal device may select, based on the second information, the target PRACH resource from one or more valid PRACH resources.

Exemplarily, in a case where the sum of the number of the first PRACH resources and the number of the second PRACH resources is less than or equal to the fifth threshold, it is indicated that the third PRACH resource is valid; and in a case where the second information indicates that the third PRACH resource has the highest priority, the target PRACH resource may be the third PRACH resource.

Herein, the fifth threshold may be specified in the protocol or configured by the network device, or may be set in another manner, which is not limited in the embodiments of the present disclosure.

Exemplarily, in a case where the received power or energy of the first reference signal is greater than or equal to the first threshold, the second PRACH resource is valid; and in a case where the second information indicates that the second PRACH resource has the highest priority, the target PRACH resource may be the second PRACH resource.

Exemplarily, in a case where the path loss corresponding to the first reference signal is less than or equal to the second threshold, the second PRACH resource is valid; and in a case where the second information indicates that the second PRACH resource has the highest priority, the target PRACH resource may be the second PRACH resource.

Exemplarily, in a case where the CLI measured by the terminal device is greater than or equal to the third threshold, the first PRACH resource and the third PRACH resource are valid; and in a case where the second information indicates that the third PRACH resource has the highest priority, the target PRACH resource may be the third PRACH resource.

Exemplarily, in a case where the frequency domain offset between the second PRACH resource and the boundary of the downlink subband is less than or equal to the fourth threshold, the first PRACH resource and the third PRACH resource are valid; and in a case where the second information indicates that the first PRACH resource has the highest priority, the target PRACH resource may be the first PRACH resource.

Exemplarily, in a case where the first PRACH resource and the third PRACH resource exist within the first time window, the first PRACH resource and the third PRACH resource are valid; and in a case where the second information indicates that the first PRACH resource has the highest priority, the target PRACH resource may be the first PRACH resource.

Through the method, the network device can directly prioritize three types of PRACH resources in the same dimension without distinguishing the type of RACH configuration, thus making the selection of the target PRACH resource simpler and improving the efficiency of determining the target PRACH resource.

It should be understood that the selection manner for the target PRACH resource proposed in the foregoing embodiments may be applicable to the entire random access procedure. That is, the selection manner for the target PRACH resource proposed in the foregoing embodiments is applicable to both initial transmission and retransmission of the random access, so that the power control mechanism of the PRACH and the modification of the Radio Access Network 2 (RAN2) protocol can be simplified to a certain extent.

It should also be understood that the selection manner for the target PRACH resource proposed in the foregoing embodiments may also be applicable to the initial transmission of the PRACH but not to the retransmission of the PRACH, and the retransmission of the PRACH may use the most recent valid PRACH resource, so that the delay can be reduced and the transmission efficiency of the PRACH can be improved.

In some embodiments, the first RACH configuration is further used to configure a fourth PRACH resource.

Herein, the fourth PRACH resource is invalid; and/or,
the terminal device expects that the fourth PRACH resource is not within the uplink subband; and/or,
the terminal device does not expect the fourth PRACH resource to be within the uplink subband.

Here, the uplink subband refers to a continuous segment of uplink frequency domain resources, the uplink subband is located in an SBFD symbol (slot), and the SBFD symbol is a DL symbol and/or a Flexible symbol configured with the uplink subband and/or the downlink subband.

Exemplarily, the fourth PRACH resource is an SBFD PRACH resource.

It should be noted that the terminal device may not expect the first RACH configuration to configure a PRACH resource in the uplink subband of the SBFD symbol.

It should also be noted that, for the network device, the network device may not configure the PRACH resource within the uplink subband of the SBFD symbol. For example, the network device may not configure the fourth PRACH resource within the uplink subband.

Furthermore, in a case where the network device configures the PRACH resource in the uplink subband of the SBFD symbol, the terminal device may consider the PRACH resource invalid.

Through the method, the fourth PRACH resource cannot be used to send the PRACH, so that the types of the PRACH resources capable of being used to send the PRACH can be reduced, and the complexity of selecting the PRACH resource by the terminal device can be simplified.

The following embodiments take the terminal device to be the SBFD-Aware UE as an example, and describe the random access method according to the embodiments of the present disclosure in detail in combination with specific application scenarios.

In the following embodiments, the Legacy RACH configuration is equivalent to the non SBFD-related RACH configuration in the foregoing embodiments, the Additional RACH configuration is equivalent to the SBFD-related RACH configuration in the foregoing embodiments, and the Legacy PRACH resource is equivalent to the non SBFD PRACH resource in the foregoing embodiments.

In the random access method according to the embodiments of the present disclosure, for the SBFD-Aware UE, in the above Option 1, it may be assumed that the Legacy PRACH resource configured by the Legacy RACH configuration is valid; and in the above Option 2, it may be assumed that both Type 1 and Type 3 PRACH resources are valid. That is, in the Option 1, both the SBFD PRACH resource and the Legacy PRACH resource configured by the Legacy RACH configuration are valid; and in the Option 2, the PRACH resources of Type 1, Type 3 and Type 4 are valid.

The SBFD-Aware UE may receive the Legacy RACH configuration and/or the Additional RACH configuration, and may select the target PRACH resource to send the PRACH based on the plurality of types of PRACH resources configured by the Legacy RACH configuration and/or the Additional RACH configuration. Hereinafter, the manner of determining the target PRACH resource in the Option 1 and Option 2 will be described with reference to the following Embodiment 1 and Embodiment 2.

Embodiment 1, the manner of determining the target PRACH resource in the Option 1.

The SBFD-Aware UE may receive the Legacy RACH configuration, and select the target PRACH resource among the Legacy PRACH resource and the SBFD PRACH resource configured by the Legacy RACH configuration to send the PRACH. The selection manner of the target PRACH resource may include the following.
(1) The protocol specifies that the SBFD PRACH resource is selected as the target PRACH resource.

According to the manner, since the non SBFD-Aware UE cannot send the PRACH on the SBFD PRACH resource, and the SBFD-Aware UE preferentially selects to send the PRACH on the SBFD PRACH resource, the probability of collision between the Legacy PRACH resource and the non SBFD-Aware UE can be reduced. In addition, the base station can also be enabled to identify the SBFD-Aware UE by receiving the PRACH on the SBFD PRACH resource, so that the base station can guide the scheduling of the subsequent operations of the random access.

(2) The SBFD PRACH resource or the Legacy PRACH resource is selected as the target PRACH resource based on the first information configured by the base station side. Herein, the first information is used to instruct the SBFD-Aware UE to select the SBFD PRACH resource or the Legacy PRACH resource as the target PRACH resource, or the first information is used to indicate the priorities of the SBFD PRACH resource and the Legacy PRACH resource, and the target PRACH resource is the PRACH resource having the highest priority among the SBFD PRACH resource and the Legacy PRACH resource.

Through the method, the base station may instruct the SBFD-Aware UE to select the target PRACH resource according to different situations of different SBFD-Aware UEs. For example, in a case where the SBFD-Aware UE is located at the center of the cell, the base station may instruct the SBFD-Aware UE to send the PRACH by using the SBFD PRACH resource as the target PRACH resource to achieve the purpose of reducing collisions on the Legacy PRACH resource. In a case where the SBFD-Aware UE is located at the edge of the cell, the base station may instruct the SBFD-Aware UE to send the PRACH by using the Legacy PRACH resource as the target PRACH resource, so as to avoid an excessive PRACH transmission power of the SBFD PRACH resource and generation of an excessive CLI for uplink transmission of the uplink subband. In addition, the effect of load balancing can be obtained by the base station indicating the target PRACH resource selected by the SBFD-Aware UE.

(3) In a case where the received power (such as Reference Signal Receiving Power (RSRP)) or energy of the PRACH-associated RS (i.e., the first Reference Signal) measured by the SBFD-Aware UE is greater than or equal to the first threshold; and/or, in a case where the received power or energy of the RS is less than or equal to the first threshold, the target PRACH resource is the Legacy PRACH resource.

Through the method, in a case where the received power or energy of the RS is high (e.g., greater than the first threshold), the SBFD-Aware UE may be at a relatively central location of the cell, and the power used by the SBFD-Aware UE to send the PRACH is also low at this time, so that the transmission of the PRACH by using the SBFD PRACH resource does not generate a significant CLI. In a case where the received power or energy of the RS is low (e.g., less than the first threshold), the SBFD-Aware UE may be at a relatively edge location of the cell, and the power used by the SBFD-Aware UE to send the PRACH is also high at this time, so the Legacy PRACH resource is used to send the PRACH to avoid generating the significant CLI.

(4) In a case where the path loss corresponding to the RS is less than or equal to the second threshold, the target PRACH resource is the SBFD PRACH resource; and/or, in a case where the path loss corresponding to the RS is greater than or equal to the second threshold, the target PRACH resource is the Legacy PRACH resource.

Through the method, in a case where the path loss corresponding to the RS is low (e.g., less than the second threshold), the SBFD-Aware UE may be at the relatively central location of the cell, and the power used by the SBFD-Aware UE to send the PRACH is also low at this time, so that the transmission of the PRACH by using the SBFD PRACH resource does not generate a significant CLI. In a case where the path loss corresponding to the RS is high (e.g., greater than the second threshold), the SBFD-Aware UE may be at the relatively edge location of the cell, and the power used by the SBFD-Aware UE to send the PRACH is also high at this time, so the Legacy PRACH resource is used to send the PRACH to avoid generating the significant CLI.

(5) In a case where the CLI measured by the SBFD-Aware UE is less than or equal to the third threshold, the target PRACH resource is the SBFD PRACH resource; and/or, in a case where the CLI measured by the SBFD-Aware UE is greater than or equal to the third threshold, the target PRACH resource is the Legacy PRACH resource.

Through the method, in a case where the CLI measured by the SBFD-Aware UE is low (e.g., less than the third threshold), the transmission of the PRACH by using the SBFD PRACH resource does not generate a significant CLI. In the case where the CLI measured by the SBFD-Aware UE is high (e.g., greater than the third threshold), the PRACH is sent by using the Legacy PRACH resource to avoid generating the significant CLI.

(6) In a case where the frequency domain offset between the SBFD PRACH resource and the boundary of the downlink subband is greater than or equal to the fourth threshold, the target PRACH resource is the SBFD PRACH resource; and/or, in a case where the frequency domain offset between the SBFD PRACH resource and the boundary of the downlink subband is less than or equal to the fourth threshold, the target PRACH resource is the Legacy PRACH resource.

Herein, the frequency domain offset between the SBFD PRACH resource and the boundary of the downlink subband includes one or more of the following:
a frequency domain offset between a starting position of the SBFD PRACH resource and a starting position of the downlink subband;
a frequency domain offset between an end position of the SBFD PRACH resource and an end position of the downlink subband;
a frequency domain offset between the starting position of the SBFD PRACH resource and the end position of the downlink subband; and
a frequency domain offset between the end position of the SBFD PRACH resource and the starting position of the downlink subband.

Through the method, in a case where the frequency domain offset between the SBFD PRACH resource and the boundary of the downlink subband is greater than or equal to the fourth threshold, the CLI generated by the SBFD PRACH resource to the downlink subband is low, and the significant CLI is not generated even when the PRACH is sent by using the SBFD PRACH resource. In a case where the frequency domain offset between the SBFD PRACH resource and the boundary of the downlink subband is less than or equal to the fourth threshold, the CLI generated by the SBFD PRACH resource to the downlink subband is high, and the PRACH is sent by using the Legacy PRACH resource to avoid generating a more significant CLI.

(7) Within the first time window after the random access procedure is initiated, in a case where the Legacy PRACH resource and the SBFD PRACH resource exist, the target PRACH resource is the SBFD PRACH resource; and/or, in a case where the Legacy PRACH resource exists and the SBFD PRACH resource does not exist, the target PRACH resource is the Legacy PRACH resource; and/or, in a case where the SBFD PRACH resource exists and the Legacy PRACH resource does not exist, the target PRACH resource is the SBFD PRACH resource.

Herein, the length of the first time window is specified in the protocol or configured by the base station side.

Through the method, based on the introduction of the first time window, the SBFD PRACH resource can be selected as the target PRACH resource within a certain time delay range, thus not only reducing the conflict with the Legacy PRACH resource, but also ensuring the delay requirement.

(8) The above selection manners (2) to (7) can be used in combination.

Exemplarily, the manner (2) may be used in combination with the manners (3) to (6). The base station side may indicate the target PRACH resource selected by the SBFD-Aware UE through the first information, and the SBFD-Aware UE may select the target PRACH resource based on the instruction of the base station side and one or more of the conditions (3) to (6). For example, the base station side may instruct the SBFD-Aware UE to select the SBFD PRACH resource as the target PRACH resource through the first information, and the SBFD-Aware UE may determine whether one or more of the conditions (3) to (6) are satisfied. If satisfied, the SBFD PRACH resource is selected; and if not satisfied, the PRACH resource is selected based on the SBFD-Aware UE implementation, or the Legacy PRACH resource is selected.

Exemplarily, the manner (2) may be used in combination with the manner (7). The base station side may indicate the target PRACH resource selected by the SBFD-Aware UE through the first information, and the SBFD-Aware UE may select the target PRACH resource based on the instruction of the base station side and the first time window constraint. For example, the base station side may instruct the SBFD-Aware UE to select the SBFD PRACH resource as the target PRACH resource through the first information, and the SBFD-Aware UE may determine whether the SBFD PRACH resource exists within the first time window. If the SBFD PRACH resource exists, the SBFD PRACH resource is selected; if the SBFD PRACH resource does not exist, the Legacy PRACH resource is selected.

Embodiment 2, the manner of determining the target PRACH resource in the Option 2.

The SBFD-Aware UE may receive the Legacy RACH configuration and the Additional RACH configuration.

For the SBFD-Aware UE, the SBFD PRACH resource configured by the Legacy RACH configuration is invalid; that is, the SBFD-Aware UE does not expect PRACH resource (or RO) configured by the Legacy RACH configuration to be within the uplink subband of the SBFD symbol.

Through the method, the type (or kind) of the PRACH resource (or RO) can be reduced, and the complexity of selecting the PRACH resource (or RO) by the SBFD-Aware UE can be simplified.

Among the Legacy PRACH resource (the PRACH resource of Type 1) configured by the Legacy RACH configuration, the SBFD PRACH resource (the PRACH resource of Type 4) configured by the Additional RACH configuration, and the Legacy PRACH resource (the PRACH resource of Type 3) configured by the Additional RACH configuration (corresponding to the three types of PRACH resources), the SBFD-Aware UE may select the target PRACH resource to send the PRACH. The manner of selecting the target PRACH resource may include the following.
(a) First, the SBFD PRACH resource and the Legacy PRACH resource configured by the Additional RACH configuration are selected, and different types of PRACH resources are selected among the SBFD PRACH resource and the Legacy PRACH resource configured by the Additional RACH configuration. For the scheme of selecting different types of PRACH resources in the Additional RACH configuration, reference may be made to the descriptions in Option 1, which will not be repeated herein.
(b) The base station side may configure the priorities of the three types of PRACH resources, and the SBFD-Aware UE may select the target PRACH resource to send the PRACH based on the availability and priorities of the three types of PRACH resources (e.g., the SBFD-Aware UE selects the PRACH resource with the highest priority among the three types of valid PRACH resources).

According to this manner, the three types of PRACH resources can be directly configured with the priorities in the same dimension without distinguishing the type of RACH configuration, thus enabling the selection of the target PRACH resource to be simplified by using the scheme in Option 2.

Herein, the availability of the three types of PRACH resources may include the following.
(i) All three types of PRACH resources are valid.
(ii) The three types of PRACH resources are valid under certain conditions, for example: the PRACH resource of Type 1 is valid only when one or more of the conditions (3) to (6) mentioned in Option 1 are met; for another example, the PRACH resource of Type 3 is valid only when the number of PRACH resources of Type 1 and the number of PRACH resources of Type 4 are both less than or equal to a certain threshold.

The embodiments of the present disclosure provide the random access method, where the SBFD-Aware UE can receive the Legacy RACH configuration and/or the Additional RACH configuration, and the Legacy RACH configuration and/or the Additional RACH configuration is/are used to configure the plurality of types of PRACH resources; the SBFD-Aware UE can send the PRACH on the target PRACH resource that is one of the plurality of types of PRACH resources configured by the Legacy RACH configuration and/or the Additional RACH configuration. In such way, the SBFD-Aware UE may select the target PRACH resource among the plurality of types of PRACH resources configured by the base station to send PRACH. Thus, the reliability of the random access can be ensured, the conflict of random access contention between different terminal devices can be reduced, and the success rate of the random access can be improved.

The preferred embodiments of the present disclosure have been described in detail above with reference to the accompanying drawings. However, the present disclosure is not limited to the specific details in the above embodiments, and a variety of simple modifications can be made to the technical solutions of the present disclosure within the scope of the technical concept of the present disclosure, and these simple modifications all belong to the protection scope of the present disclosure. For example, each specific technical feature described in the above detailed description can be combined in any suitable manner provided that there is no contradiction, and various possible combinations will not be further described in the present disclosure in order to avoid unnecessary repetition. As another example, any combination of various embodiments of the present disclosure may be made, and as long as it does not depart from the spirit of the present disclosure, it should also be regarded as the disclosed content of the present disclosure. For another example, on the premise that there is no conflict, each embodiment and/or the technical features in each embodiment described in the present disclosure can be arbitrarily combined with the prior art, and the technical solutions obtained after the combination should also fall within the protection scope of the present disclosure.

It should also be understood that, in the various method embodiments of the present disclosure, the size of the sequence numbers of the foregoing processes does not imply the order of the execution, and the order of the execution of each process should be determined by its function and internal logic, and should not constitute any limitation on the implementation processes of the embodiments of the present disclosure.

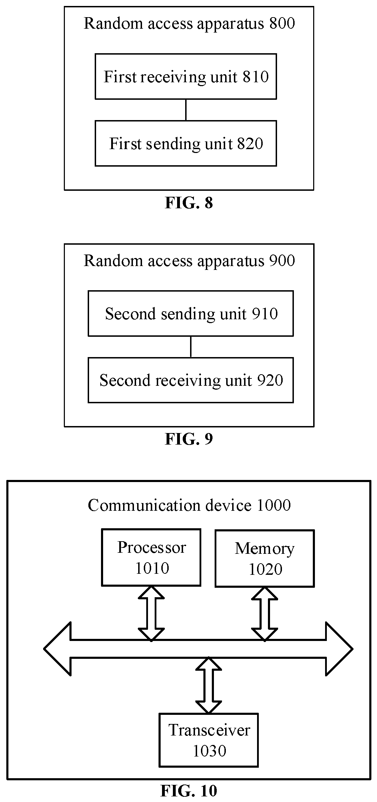

FIG. 8 is a schematic structural diagram of a random access apparatus 800 according to an embodiment of the present disclosure. The random access apparatus 800 is applied to a terminal device. As shown in FIG. 8, the random access apparatus 800 includes a first receiving unit 810 and a first sending unit 820.

The first receiving unit 810 is configured to receive a first random access channel (RACH) configuration and/or a second RACH configuration, where the first RACH configuration and/or the second RACH configuration is/are used to configure a plurality of types of physical random access channel (PRACH) resources.

The first sending unit 820 is configured to send a PRACH on a target PRACH resource, where the target PRACH resource is one of the plurality of types of PRACH resources configured by the first RACH configuration and/or the second RACH configuration.

In some embodiments, the first RACH configuration is used to configure a first PRACH resource and a second PRACH resource; and the target PRACH resource is the first PRACH resource or the second PRACH resource.

In some embodiments, the first RACH configuration is used to configure a third PRACH resource; the second RACH configuration is used to configure a first PRACH resource and/or a second PRACH resource; and the target PRACH resource is one of the plurality of types of PRACH resources configured by the first RACH configuration and the second RACH configuration.

In some embodiments, the target PRACH resource is specified in a protocol or configured by a network device, and the target PRACH resource is one of one or more types of PRACH resources configured by the second RACH configuration.

In some embodiments, the first receiving unit 810 is further configured to receive first information. Herein, the first information is used to indicate priorities of the first PRACH resource and the second PRACH resource, and the target PRACH resource is a PRACH resource having a highest priority among the first PRACH resource and the second PRACH resource; or, the first information is used to instruct the terminal device to select the first PRACH resource or the second PRACH resource as the target PRACH resource.

In some embodiments, the target PRACH resource is determined based on one or more of the following:
a received power or energy of a first reference signal;
a path loss corresponding to the first reference signal;
a cross-link interference level measured by the terminal device; and
a frequency domain location of the second PRACH resource.

In some embodiments, in a case where the received power or energy of the first reference signal is greater than or equal to a first threshold, the target PRACH resource is the second PRACH resource; and/or, in a case where the received power or energy of the first reference signal is less than or equal to the first threshold, the target PRACH resource is the first PRACH resource.

In some embodiments, in a case where the path loss corresponding to the first reference signal is less than or equal to a second threshold, the target PRACH resource is the second PRACH resource; and/or, in a case where the path loss corresponding to the first reference signal is greater than or equal to the second threshold, the target PRACH resource is the first PRACH resource.

In some embodiments, in a case where the cross-link interference measured by the terminal device is less than or equal to a third threshold, the target PRACH resource is the second PRACH resource; and/or, in a case where the cross-link interference measured by the terminal device is greater than or equal to the third threshold, the target PRACH resource is the first PRACH resource.

In some embodiments, in a case where a frequency domain offset between the second PRACH resource and a boundary of a downlink subband is greater than or equal to a fourth threshold, the target PRACH resource is the second PRACH resource; and/or, in a case where a frequency domain offset between the second PRACH resource and the boundary of the downlink subband is less than or equal to the fourth threshold, the target PRACH resource is the first PRACH resource. Herein, the downlink subband is a continuous segment of downlink frequency domain resources.

In some embodiments, the frequency domain offset between the second PRACH resource and the boundary of the downlink subband includes one or more of the following:
a frequency domain offset between a starting position of the second PRACH resource and a starting position of the downlink subband;
a frequency domain offset between an end position of the second PRACH resource and an end position of the downlink subband;
a frequency domain offset between the starting position of the second PRACH resource and the end position of the downlink subband; and
a frequency domain offset between the end position of the second PRACH resource and the starting position of the downlink subband.

In some embodiments, the target PRACH resource is determined based on a first preset condition. Herein, the first preset condition includes whether the first PRACH resource and/or the second PRACH resource exist in a first time window after a random access procedure is initiated.

In some embodiments, in a case where the first PRACH resource and the second PRACH resource exist, the target PRACH resource is the second PRACH resource; and/or, in a case where the first PRACH resource exists and the second PRACH resource does not exist, the target PRACH resource is the first PRACH resource; and/or, in a case where the second PRACH resource exists and the first PRACH resource does not exist, the target PRACH resource is the second PRACH resource.

In some embodiments, the first receiving unit 810 is further configured to receive first information. The target PRACH resource is determined based on the first information and one or more of the following:
a received power or energy of a first reference signal;
a path loss corresponding to the first reference signal;
a cross-link interference level measured by the terminal device; and
a frequency domain location of the second PRACH resource.

Herein, the first information is used to indicate priorities of the first PRACH resource and the second PRACH resource; or, the first information is used to instruct the terminal device to select the first PRACH resource or the second PRACH resource as the target PRACH resource.

In some embodiments, the first receiving unit 810 is further configured to receive first information. The target PRACH resource is determined based on the first information and a first preset condition.

Herein, the first information is used to indicate priorities of the first PRACH resource and the second PRACH resource; or, the first information is used to instruct the terminal device to select the first PRACH resource or the second PRACH resource as the target PRACH resource.

The first preset condition includes whether the first PRACH resource and/or the second PRACH resource exist in a first time window after a random access procedure is initiated.

In some embodiments, the target PRACH resource is determined based on a first preset condition and one or more of the following:
a received power or energy of a first reference signal;
a path loss corresponding to the first reference signal;
a cross-link interference level measured by the terminal device; and
a frequency domain location of the second PRACH resource.

Herein, the first preset condition includes whether the first PRACH resource and/or the second PRACH resource exist in a first time window after a random access procedure is initiated.

In some embodiments, the target PRACH resource is specified in a protocol, and the target PRACH resource is the second PRACH resource.

In some embodiments, the first receiving unit 810 is further configured to receive second information. Herein, the second information is used to indicate priorities of the first PRACH resource, the second PRACH resource and the third PRACH resource, and the target PRACH resource is a PRACH resource having a highest priority among the first PRACH resource, the second PRACH resource and the third PRACH resource.

Alternatively, the second information is used to instruct the terminal device to select one of the first PRACH resource, the second PRACH resource and the third PRACH resource as the target PRACH resource.

In some embodiments, the first RACH configuration is further used to configure a fourth PRACH resource.

Herein, the fourth PRACH resource is invalid; and/or,
the terminal device expects that the fourth PRACH resource is not within the uplink subband; and/or,
the terminal device does not expect the fourth PRACH resource to be within the uplink subband, where the uplink subband is a continuous segment of uplink frequency domain resources.

In some embodiments, the first RACH configuration is a non subband full duplex (SBFD)-related RACH configuration, and the second RACH configuration is an SBFD-related RACH configuration.

Embodiments of the present disclosure provide the random access apparatus. The apparatus receives the first RACH configuration and/or the second RACH configuration, where the first RACH configuration and/or the second RACH configuration is/are used to configure the plurality of types of PRACH resources. The apparatus further sends the PRACH on the target PRACH resource, where the target PRACH resource is one of the plurality of types of PRACH resources configured by the first RACH configuration and/or the second RACH configuration. In such way, the apparatus can select the target PRACH resource among the plurality of types of PRACH resources configured by the network device to send the PRACH. Thus, the reliability of the random access can be ensured, the conflict of random access contention between different terminal devices can be reduced, and the success rate of the random access can be improved.

It should be understood by those skilled in the art that, for the relevant descriptions of the foregoing random access apparatus according to the embodiments of the present disclosure, reference may be made to the relevant descriptions of the random access method according to the embodiments of the present disclosure.

FIG. 9 is a schematic structural diagram of a random access apparatus 900 according to an embodiment of the present disclosure. The random access apparatus 900 is applied to a network device. As shown in FIG. 9, the random access device 900 includes a second sending unit 910 and a second receiving unit 920.

The second sending unit 910 is configured to send a first random access channel (RACH) configuration and/or a second RACH configuration, where the first RACH configuration and/or the second RACH configuration is/are used to configure a plurality of types of physical random access channel (PRACH) resources.

The second receiving unit 920 is configured to a PRACH on a target PRACH resource, where the target PRACH resource is one of the plurality of types of PRACH resources configured by the first RACH configuration and/or the second RACH configuration.

In some embodiments, the first RACH configuration is used to configure a first PRACH resource and a second PRACH resource; and the target PRACH resource is the first PRACH resource or the second PRACH resource.

In some embodiments, the first RACH configuration is used to configure a third PRACH resource; the second RACH configuration is used to configure a first PRACH resource and/or a second PRACH resource; and the target PRACH resource is one of the plurality of types of PRACH resources configured by the first RACH configuration and the second RACH configuration.

In some embodiments, the target PRACH resource is specified in a protocol or configured by the network device, and the target PRACH resource is one of one or more types of PRACH resources configured by the second RACH configuration.

In some embodiments, the second sending unit 910 is further configured to send first information. Herein, the first information is used to indicate priorities of the first PRACH resource and the second PRACH resource, and the target PRACH resource is a PRACH resource having a highest priority among the first PRACH resource and the second PRACH resource; or, the first information is used to instruct the terminal device to select the first PRACH resource or the second PRACH resource as the target PRACH resource.

In some embodiments, the target PRACH resource is determined based on one or more of the following:
a received power or energy of a first reference signal;
a path loss corresponding to the first reference signal;
a cross-link interference level measured by the terminal device; and
a frequency domain location of the second PRACH resource.

In some embodiments, in a case where the received power or energy of the first reference signal is greater than or equal to a first threshold, the target PRACH resource is the second PRACH resource; and/or, in a case where the received power or energy of the first reference signal is less than or equal to the first threshold, the target PRACH resource is the first PRACH resource.

In some embodiments, in a case where the path loss corresponding to the first reference signal is less than or equal to a second threshold, the target PRACH resource is the second PRACH resource; and/or, in a case where the path loss corresponding to the first reference signal is greater than or equal to the second threshold, the target PRACH resource is the first PRACH resource.

In some embodiments, in a case where the cross-link interference measured by the terminal device is less than or equal to a third threshold, the target PRACH resource is the second PRACH resource; and/or, in a case where the cross-link interference measured by the terminal device is greater than or equal to the third threshold, the target PRACH resource is the first PRACH resource.

In some embodiments, in a case where a frequency domain offset between the second PRACH resource and a boundary of a downlink subband is greater than or equal to a fourth threshold, the target PRACH resource is the second PRACH resource; and/or, in a case where a frequency domain offset between the second PRACH resource and the boundary of the downlink subband is less than or equal to the fourth threshold, the target PRACH resource is the first PRACH resource. Herein, the downlink subband is a continuous segment of downlink frequency domain resources.

In some embodiments, the frequency domain offset between the second PRACH resource and the boundary of the downlink subband includes one or more of the following:
a frequency domain offset between a starting position of the second PRACH resource and a starting position of the downlink subband;
a frequency domain offset between an end position of the second PRACH resource and an end position of the downlink subband;
a frequency domain offset between the starting position of the second PRACH resource and the end position of the downlink subband; and
a frequency domain offset between the end position of the second PRACH resource and the starting position of the downlink subband.

In some embodiments, the target PRACH resource is determined based on a first preset condition. Herein, the first preset condition includes whether the first PRACH resource and/or the second PRACH resource exist in a first time window after a random access procedure is initiated.

In some embodiments, in a case where the first PRACH resource and the second PRACH resource exist, the target PRACH resource is the second PRACH resource; and/or, in a case where the first PRACH resource exists and the second PRACH resource does not exist, the target PRACH resource is the first PRACH resource; and/or, in a case where the second PRACH resource exists and the first PRACH resource does not exist, the target PRACH resource is the second PRACH resource.

In some embodiments, the second sending unit 910 is further configured to send first information. The target PRACH resource is determined based on the first information and one or more of the following:
a received power or energy of a first reference signal;
a path loss corresponding to the first reference signal;
a cross-link interference level measured by the terminal device; and
a frequency domain location of the second PRACH resource.

Herein, the first information is used to indicate priorities of the first PRACH resource and the second PRACH resource; or, the first information is used to instruct the terminal device to select the first PRACH resource or the second PRACH resource as the target PRACH resource.

In some embodiments, the second sending unit 910 is further configured to send first information. The target PRACH resource is determined based on the first information and a first preset condition.

Herein, the first information is used to indicate priorities of the first PRACH resource and the second PRACH resource; or, the first information is used to instruct the terminal device to select the first PRACH resource or the second PRACH resource as the target PRACH resource.

The first preset condition includes whether the first PRACH resource and/or the second PRACH resource exist in a first time window after a random access procedure is initiated.

In some embodiments, the target PRACH resource is determined based on a first preset condition and one or more of the following:
a received power or energy of a first reference signal;
a path loss corresponding to the first reference signal;
a cross-link interference level measured by the terminal device; and
a frequency domain location of the second PRACH resource.

Herein, the first preset condition includes whether the first PRACH resource and/or the second PRACH resource exist in a first time window after a random access procedure is initiated.

In some embodiments, the target PRACH resource is specified in a protocol, and the target PRACH resource is the second PRACH resource.

In some embodiments, the second sending unit 910 is further configured to send second information. Herein, the second information is used to indicate priorities of the first PRACH resource, the second PRACH resource and the third PRACH resource, and the target PRACH resource is a PRACH resource having a highest priority among the first PRACH resource, the second PRACH resource and the third PRACH resource.

Alternatively, the second information is used to instruct the terminal device to select one of the first PRACH resource, the second PRACH resource and the third PRACH resource as the target PRACH resource.

In some embodiments, the first RACH configuration is further used to configure a fourth PRACH resource. Herein, the fourth PRACH resource is invalid; and/or, the fourth PRACH resource is not within an uplink subband. The uplink subband refers to a continuous segment of uplink frequency domain resources.

In some embodiments, the first RACH configuration is a non subband full duplex (SBFD)-related RACH configuration, and the second RACH configuration is an SBFD-related RACH configuration.

Embodiments of the present disclosure provide the random access apparatus. The apparatus sends the first RACH configuration and/or the second RACH configuration, where the first RACH configuration and/or the second RACH configuration is/are used to configure the plurality of types of PRACH resources. The apparatus further receives the PRACH on the target PRACH resource, where the target PRACH resource is one of the plurality of types of PRACH resources configured by the first RACH configuration and/or the second RACH configuration. In such way, the apparatus can configure the plurality of types of PRACH resources for the terminal device, so that the terminal device can select the target PRACH resource among the plurality of types of PRACH resources to send the PRACH. Thus, the reliability of the random access can be ensured, the conflict of random access contention between different terminal devices can be reduced, and the success rate of the random access can be improved.

It should be understood by those skilled in the art that, for the relevant descriptions of the foregoing random access apparatus according to the embodiments of the present disclosure, reference may be made to the relevant descriptions of the random access method according to the embodiments of the present disclosure.

FIG. 10 is a schematic diagram of a structural composition of a communication device according to an embodiment of the present disclosure. The communication device 1000 may be a terminal device or a network device. The communication device 1000 shown in FIG. 10 may include a processor 1010, a memory 1020 and a transceiver 1030.

Herein, the memory 1020 is configured to store a computer program.

The processor 1010 is connected to the memory 1020, and is configured to call and run the computer program from the memory 1020 to implement the method in the embodiments of the present disclosure.

The transceiver 1030 is also referred to as a communication interface, and is configured to receive and send information during information interaction with other external devices.

In some embodiments, the memory 1020 may be a separate device independent of the processor 1010 or may be integrated in the processor 1010.

In some embodiments, the transceiver 1030 may include an input interface. Here, the processor 1010 may control the input interface to communicate with other external devices, and specifically, may receive information or data sent by other external devices.

In some embodiments, the transceiver 1030 may include an output interface. Here, the processor 1010 may control the output interface to communicate with other external devices, specifically, may send information or data to other external devices.

In some embodiments, the transceiver 1030 may include a transmitter and a receiver. The transceiver 1030 may further include one or more antennas.

In some embodiments, the communication device 1000 can be applied to the network device of the embodiments of the present disclosure, and the communication device 1000 can realize the corresponding processes implemented by the network device in each method of the embodiments of the present disclosure, which will not be repeated herein for brevity.

In some embodiments, the communication device 1000 can be applied to the terminal device of the embodiments of the present disclosure, and the communication device 1000 can realize the corresponding processes implemented by the terminal device in each method of the embodiments of the present disclosure, which will not be repeated herein for brevity.

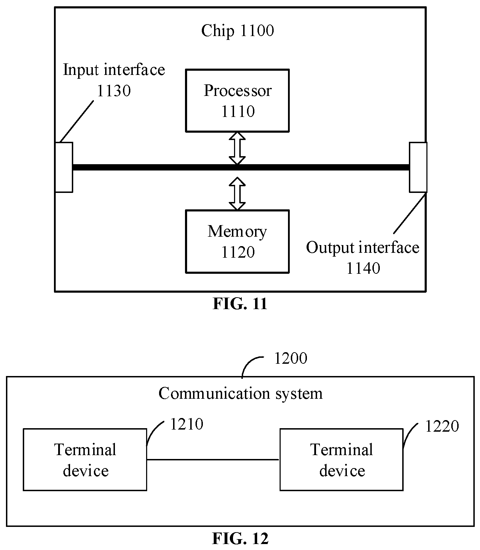

FIG. 11 is a schematic structural diagram of a chip according to an embodiment of the present disclosure. The chip 1100 shown in FIG. 11 includes a processor 1110 that can call and run a computer program from a memory to implement each method in the embodiments of the present disclosure.

In some embodiments, as shown in FIG. 11, the chip 1100 may further include a memory 1120. Herein, the processor 1110 may be configured to call and run the computer program from the memory 1120 to implement each method in the embodiments of the present disclosure.

Herein, the memory 1120 may be a separate device independent of the processor 1110, or may be integrated in the processor 1110.

In some embodiments, the chip 1100 may further include an input interface 1130. Herein, the processor 1110 may control the input interface 1130 to communicate with other devices or chips, and specifically, may acquire information or data sent by other devices or chips.

In some embodiments, the chip 1100 may further include an output interface 1140. Herein, the processor 1110 may control the output interface 1140 to communicate with other devices or chips, and specifically, may output information or data to other devices or chips.

In some embodiments, the chip can be applied to the terminal device in the embodiments of the present disclosure, and the chip can realize the corresponding processes implemented by the terminal device in each method of the embodiments of the present disclosure, which will not be repeated herein for brevity.

In some embodiments, the chip can be applied to the network device in the embodiments of the present disclosure, and the chip can realize the corresponding processes implemented by the network device in each method of the embodiments of the present disclosure, which will not be repeated herein for brevity. It should be understood that the chip mentioned in the embodiments of the present disclosure may also be referred to as a system-level chip, a system chip, a chip system, a system-on-chip chip, or the like.

FIG. 12 is a schematic block diagram of a communication system according to an embodiment of the present disclosure. As shown in FIG. 12, the communication system 1200 includes a terminal device 1210 and a network device 1220.

Herein, the terminal device 1210 may be configured to implement the corresponding functions implemented by the terminal device in the foregoing methods, and the network device 1220 may be configured to implement the corresponding functions implemented by the network device in the foregoing methods, which will not be repeated herein for brevity.

It should be understood that the processor of the embodiments of the present disclosure may be an integrated circuit chip having signal processing capability. In the implementation process, the operations of the foregoing method embodiments may be completed by hardware integrated logic circuitry in the processor or instructions in the form of software. The processor may be a general-purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component, which can implement or execute the methods, operations, and logical block diagrams disclosed in the embodiments of the present disclosure. The general-purpose processor may be a microprocessor, or the processor may be any conventional processor or the like. The operations of the method disclosed with reference to the embodiments of the present disclosure may be directly embodied as being executed and completed by a hardware decoding processor, or may be executed and completed by a combination of hardware and software modules in the decoding processor. The software module may be located in a storage medium mature in the art, such as random access memory, a flash memory, a read-only memory, a programmable read-only memory, or an electrically erasable programmable memory, a register, etc. The storage medium is located in the memory, and the processor reads the information in the memory and completes the operations of the method in combination with its hardware.

It should be understood that the memory in the embodiments of the present disclosure may be a volatile memory or a non-volatile memory, or may include both the volatile memory and the non-volatile memory. The non-volatile memory may be a Read-Only Memory (ROM), a Programmable Read-Only Memory (PROM), an Erasable Programmable Read-Only Memory (EPROM), an Electrically Erasable Programmable Read-Only Memory (EPROM), or a flash memory. The volatile memory may be a Random Access Memory (RAM), which serves as an external cache. By way of example but not limitation, many forms of RAM are valid, such as a Static Random Access Memory (SRAM), a Dynamic Random Access Memory (DRAM), a Synchronous DRAM (SDRAM), a Double Data Rate SDRAM (DDR SDRAM), an Enhanced Synchronous DRAM (ESDRAM), a Synchlink DRAM (SLDRAM), and Direct Rambus RAM (DR RAM). It should be noted that the memory of the systems and methods described herein is intended to include, but is not limited to, these and any other suitable types of memory.

Embodiments of the present disclosure also provide a computer-readable storage medium storing a computer program, and when the computer program is executed by at least one processor, the method in the embodiments of the present disclosure is implemented.

In some embodiments, the computer-readable storage medium can be applied to the network device in the embodiments of the present disclosure, and the computer program causes the computer to execute the corresponding processes implemented by the network device in each method of the embodiments of the present disclosure, which will not be repeated herein for brevity.

In some embodiments, the computer-readable storage medium can be applied to the terminal device in the embodiments of the present disclosure, and the computer program causes the computer to execute the corresponding processes implemented by the terminal device in each method of the embodiments of the present disclosure, which will not be repeated herein for brevity.

Embodiments of the present disclosure also provide a computer program product, which includes a computer storage medium storing a computer program. The computer program includes instructions executable by at least one processor, and when the instructions are executed by the at least one processor, the method in the embodiments of the present disclosure is implemented.

In some embodiments, the computer program product can be applied to the network device in the embodiments of the present disclosure, and the computer program instructions cause the computer to execute the corresponding processes implemented by the network device in each method of the embodiments of the present disclosure, which will not be repeated herein for brevity.

In some embodiments, the computer program product can be applied to the terminal device in the embodiments of the present disclosure, and the computer program instructions cause the computer to execute the corresponding processes implemented by the terminal device in each method of the embodiments of the present disclosure, which will not be repeated herein for brevity.

Embodiments of the present disclosure also provide a computer program that causes a computer to perform the method in the embodiments of the present disclosure.

In some embodiments, the computer program can be applied to the network device in the embodiments of the present disclosure; and when the computer program is run on the computer, the computer is caused to execute the corresponding processes implemented by the network device in each method of the embodiments of the present disclosure, which will not be repeated herein for brevity.

In some embodiments, the computer program can be applied to the terminal device in the embodiments of the present disclosure; and when the computer program is run on the computer, the computer is caused to execute the corresponding processes implemented by the terminal device in each method of the embodiments of the present disclosure, which will not be repeated herein for brevity.

Those of ordinary skill in the art will recognize that the units and algorithm steps of the various examples described with reference to the embodiments disclosed herein can be implemented by electronic hardware, or a combination of computer software and electronic hardware. Whether these functions are performed in hardware or software depends on the specific application and design constraints of the technical solutions. A person skilled in the art may implement the described functionality using different methods for each particular application, but such implementation should not be considered to go beyond the scope of the present disclosure.

A person skilled in the art can clearly understand that, for convenience and brevity of the description, the specific working processes of the foregoing systems, devices, and units can be referred to the corresponding processes in the foregoing method embodiments, which will not be repeated herein.

In the several embodiments provided in the present disclosure, it should be understood that the disclosed systems, apparatuses and methods may be implemented in other ways; for example, the apparatus embodiments described above are merely illustrative. For example, the division of the units is merely a logical function division, and there may be other division manners in actual implementation. For example, multiple units or components may be combined or integrated into another system, or some features may be ignored or not implemented. Furthermore, the shown or discussed coupling or direct coupling or communication connection with each other may be the indirect coupling or communication connection through some interfaces, devices or units, which may be in electrical, mechanical or other form.

The units described as separate components may or may not be physically separated, and the components shown as units may or may not be physical units, that is, they may be located in one place, or may be distributed over multiple network units. Some or all of the units may be selected according to actual needs to achieve the purpose of the solutions of the embodiments of the present disclosure.

In addition, the functional units in each embodiments of the present disclosure may be integrated into one processing unit; or, each of the units may physically exist alone, or two or more units may be integrated into one unit.

The functions, if implemented in the form of software functional units and sold or used as an independent product, may be stored in a computer-readable storage medium. Based on such understanding, the technical solutions of the present disclosure in essence or the part that contributes to the prior art or a part of the technical solutions may be embodied in the form of a software product. The computer software product is stored in a storage medium and includes several instructions for causing a computer device (which may be a personal computer, a server, or a network device, etc.) to perform all or part of the operations of each method described in various embodiments of the present disclosure. The aforementioned storage medium includes various media capable of storing program codes, such as a USB flash drive, a mobile hard disk, a ROM, a RAM, a magnetic disk, or an optical disk.

The foregoing descriptions are only specific implementations of the present disclosure, but the protection scope of the present disclosure is not limited thereto. Any person skilled in the art can easily think of modification or substitutions within the technical scope disclosed in the present disclosure, and all of them shall fall within the scope of protection of the present disclosure. Therefore, the scope of protection of the present disclosure shall be subject to the scope of protection of the claims.

## Claims

1. A random access method, applied to a terminal device, comprising:
receiving a first random access channel (RACH) configuration and/or a second RACH configuration, the first RACH configuration and/or the second RACH configuration being used to configure a plurality of types of physical random access channel (PRACH) resources;
sending a PRACH on a target PRACH resource, the target PRACH resource being one of the plurality of types of PRACH resources configured by the first RACH configuration and/or the second RACH configuration.

2. The method of claim 1, wherein
the first RACH configuration is used to configure a first PRACH resource and a second PRACH resource; and
the target PRACH resource is the first PRACH resource or the second PRACH resource.

3. The method of claim 1, wherein
the first RACH configuration is used to configure a third PRACH resource;
the second RACH configuration is used to configure a first PRACH resource and/or a second PRACH resource; and
the target PRACH resource is one of the plurality of types of PRACH resources configured by the first RACH configuration and the second RACH configuration.

4. The method of claim 3, wherein the target PRACH resource is specified in a protocol or configured by a network device, and the target PRACH resource is one of one or more types of PRACH resources configured by the second RACH configuration.

5. The method of claim 2 or 4, further comprising:
receiving first information;
wherein the first information is used to indicate priorities of the first PRACH resource and the second PRACH resource, and the target PRACH resource is a PRACH resource having a highest priority among the first PRACH resource and the second PRACH resource; or,
the first information is used to instruct the terminal device to select the first PRACH resource or the second PRACH resource as the target PRACH resource.

6. The method of claim 2, 4 or 5, wherein
the target PRACH resource is determined based on one or more of the following:
a received power or energy of a first reference signal;
a path loss corresponding to the first reference signal;
a cross-link interference level measured by the terminal device; and
a frequency domain location of the second PRACH resource.

7. The method of claim 6, wherein
in a case where the received power or energy of the first reference signal is greater than or equal to a first threshold, the target PRACH resource is the second PRACH resource; and/or,
in a case where the received power or energy of the first reference signal is less than or equal to the first threshold, the target PRACH resource is the first PRACH resource.

8. The method of claim 6 or 7, wherein
in a case where the path loss corresponding to the first reference signal is less than or equal to a second threshold, the target PRACH resource is the second PRACH resource; and/or,
in a case where the path loss corresponding to the first reference signal is greater than or equal to the second threshold, the target PRACH resource is the first PRACH resource.

9. The method of any one of claims 6 to 8, wherein
in a case where a cross-link interference measured by the terminal device is less than or equal to a third threshold, the target PRACH resource is the second PRACH resource; and/or,
in a case where the cross-link interference measured by the terminal device is greater than or equal to the third threshold, the target PRACH resource is the first PRACH resource.

10. The method of any one of claims 6 to 9, wherein
in a case where a frequency domain offset between the second PRACH resource and a boundary of a downlink subband is greater than or equal to a fourth threshold, the target PRACH resource is the second PRACH resource; and/or,
in a case where the frequency domain offset between the second PRACH resource and the boundary of the downlink subband is less than or equal to the fourth threshold, the target PRACH resource is the first PRACH resource; wherein the downlink subband is a continuous segment of downlink frequency domain resources.

11. The method of claim 10, wherein the frequency domain offset between the second PRACH resource and the boundary of the downlink subband comprises one or more of the following:
a frequency domain offset between a starting position of the second PRACH resource and a starting position of the downlink subband;
a frequency domain offset between an end position of the second PRACH resource and an end position of the downlink subband;
a frequency domain offset between the starting position of the second PRACH resource and the end position of the downlink subband; and
a frequency domain offset between the end position of the second PRACH resource and the starting position of the downlink subband.

12. The method of any one of claims 2 and 4 to 11, wherein the target PRACH resource is determined based on a first preset condition;
wherein the first preset condition comprises whether the first PRACH resource and/or the second PRACH resource exist in a first time window after a random access procedure is initiated.

13. The method of claim 12, wherein
in a case where the first PRACH resource and the second PRACH resource exist, the target PRACH resource is the second PRACH resource; and/or,
in a case where the first PRACH resource exists and the second PRACH resource does not exist, the target PRACH resource is the first PRACH resource; and/or,
in a case where the second PRACH resource exists and the first PRACH resource does not exist, the target PRACH resource is the second PRACH resource.

14. The method of any one of claims 2 and 4 to 13, further comprising:
receiving first information, the target PRACH resource being determined based on the first information and one or more of the following:
a received power or energy of a first reference signal;
a path loss corresponding to the first reference signal;
a cross-link interference level measured by the terminal device; and
a frequency domain location of the second PRACH resource;
wherein the first information is used to indicate priorities of the first PRACH resource and the second PRACH resource; or, the first information is used to instruct the terminal device to select the first PRACH resource or the second PRACH resource as the target PRACH resource.

15. The method of any one of claims 2 and 4 to 14, further comprising:
receiving first information, the target PRACH resource being determined based on the first information and a first preset condition;
wherein the first information is used to indicate priorities of the first PRACH resource and the second PRACH resource; or, the first information is used to instruct the terminal device to select the first PRACH resource or the second PRACH resource as the target PRACH resource;
the first preset condition comprises whether the first PRACH resource and/or the second PRACH resource exist in a first time window after a random access procedure is initiated.

16. The method of any one of claims 2 and 4 to 15, wherein
the target PRACH resource is determined based on a first preset condition and one or more of the following:
a received power or energy of a first reference signal;
a path loss corresponding to the first reference signal;
a cross-link interference level measured by the terminal device; and
a frequency domain location of the second PRACH resource;
wherein the first preset condition comprises whether the first PRACH resource and/or the second PRACH resource exist in a first time window after a random access procedure is initiated.

17. The method of claim 2 or 4, wherein the target PRACH resource is specified in a protocol, and the target PRACH resource is the second PRACH resource.

18. The method of claim 3, further comprising:
receiving second information;
wherein the second information is used to indicate priorities of the first PRACH resource, the second PRACH resource and the third PRACH resource, and the target PRACH resource is a PRACH resource having a highest priority among the first PRACH resource, the second PRACH resource and the third PRACH resource; or,
the second information is used to instruct the terminal device to select one of the first PRACH resource, the second PRACH resource and the third PRACH resource as the target PRACH resource.

19. The method of any one of claims 3 to 18, wherein the first RACH configuration is further used to configure a fourth PRACH resource;
wherein the fourth PRACH resource is invalid; and/or,
the terminal device expects that the fourth PRACH resource is not within an uplink subband; and/or,
the terminal device does not expect the fourth PRACH resource to be within the uplink subband; wherein the uplink subband is a continuous segment of uplink frequency domain resources.

20. The method of any one of claims 1 to 19, wherein
the first RACH configuration is a non subband full duplex (SBFD)-related RACH configuration, and the second RACH configuration is an SBFD-related RACH configuration.

21. A random access method, applied to a network device, comprising:
sending a first random access channel (RACH) configuration and/or a second RACH configuration, the first RACH configuration and/or the second RACH configuration being used to configure a plurality of types of physical random access channel (PRACH) resources;
receiving a PRACH on a target PRACH resource, the target PRACH resource being one of the plurality of types of PRACH resources configured by the first RACH configuration and/or the second RACH configuration.

22. The method of claim 21, wherein
the first RACH configuration is used to configure a first PRACH resource and a second PRACH resource; and
the target PRACH resource is the first PRACH resource or the second PRACH resource.

23. The method of claim 21, wherein
the first RACH configuration is used to configure a third PRACH resource;
the second RACH configuration is used to configure a first PRACH resource and/or a second PRACH resource; and
the target PRACH resource is one of the plurality of types of PRACH resources configured by the first RACH configuration and the second RACH configuration.

24. The method of claim 23, wherein the target PRACH resource is specified in a protocol or configured by the network device, and the target PRACH resource is one of one or more types of PRACH resources configured by the second RACH configuration.

25. The method of claim 22 or 24, further comprising:
sending first information;
wherein the first information is used to indicate priorities of the first PRACH resource and the second PRACH resource, and the target PRACH resource is a PRACH resource having a highest priority among the first PRACH resource and the second PRACH resource; or,
the first information is used to instruct the terminal device to select the first PRACH resource or the second PRACH resource as the target PRACH resource.

26. The method of claim 22, 24 or 25, wherein
the target PRACH resource is determined based on one or more of the following:
a received power or energy of a first reference signal;
a path loss corresponding to the first reference signal;
a cross-link interference level measured by the terminal device; and
a frequency domain location of the second PRACH resource.

27. The method of claim 26, wherein
in a case where the received power or energy of the first reference signal is greater than or equal to a first threshold, the target PRACH resource is the second PRACH resource; and/or,
in a case where the received power or energy of the first reference signal is less than or equal to the first threshold, the target PRACH resource is the first PRACH resource.

28. The method of claim 26 or 27, wherein
in a case where the path loss corresponding to the first reference signal is less than or equal to a second threshold, the target PRACH resource is the second PRACH resource; and/or,
in a case where the path loss corresponding to the first reference signal is greater than or equal to the second threshold, the target PRACH resource is the first PRACH resource.

29. The method of any one of claims 26 to 28, wherein
in a case where a cross-link interference measured by the terminal device is less than or equal to a third threshold, the target PRACH resource is the second PRACH resource; and/or,
in a case where the cross-link interference measured by the terminal device is greater than or equal to the third threshold, the target PRACH resource is the first PRACH resource.

30. The method of any one of claims 26 to 29, wherein
in a case where a frequency domain offset between the second PRACH resource and a boundary of a downlink subband is greater than or equal to a fourth threshold, the target PRACH resource is the second PRACH resource; and/or,
in a case where the frequency domain offset between the second PRACH resource and the boundary of the downlink subband is less than or equal to the fourth threshold, the target PRACH resource is the first PRACH resource; wherein the downlink subband is a continuous segment of downlink frequency domain resources.

31. The method of claim 30, wherein the frequency domain offset between the second PRACH resource and the boundary of the downlink subband comprises one or more of the following:
a frequency domain offset between a starting position of the second PRACH resource and a starting position of the downlink subband;
a frequency domain offset between an end position of the second PRACH resource and an end position of the downlink subband;
a frequency domain offset between the starting position of the second PRACH resource and the end position of the downlink subband; and
a frequency domain offset between the end position of the second PRACH resource and the starting position of the downlink subband.

32. The method of any one of claims 22 and 24 to 31, wherein the target PRACH resource is determined based on a first preset condition;
wherein the first preset condition comprises whether the first PRACH resource and/or the second PRACH resource exist in a first time window after a random access procedure is initiated.

33. The method of claim 32, wherein
in a case where the first PRACH resource and the second PRACH resource exist, the target PRACH resource is the second PRACH resource; and/or,
in a case where the first PRACH resource exists and the second PRACH resource does not exist, the target PRACH resource is the first PRACH resource; and/or,
in a case where the second PRACH resource exists and the first PRACH resource does not exist, the target PRACH resource is the second PRACH resource.

34. The method of any one of claims 22 and 24 to 33, further comprising:
sending first information, the target PRACH resource being determined based on the first information and one or more of the following:
a received power or energy of a first reference signal;
a path loss corresponding to the first reference signal;
a cross-link interference level measured by the terminal device; and
a frequency domain location of the second PRACH resource;
wherein the first information is used to indicate priorities of the first PRACH resource and the second PRACH resource; or, the first information is used to instruct the terminal device to select the first PRACH resource or the second PRACH resource as the target PRACH resource.

35. The method of any one of claims 22 and 24 to 34, further comprising:
sending first information, the target PRACH resource being determined based on the first information and a first preset condition;
wherein the first information is used to indicate priorities of the first PRACH resource and the second PRACH resource; or, the first information is used to instruct the terminal device to select the first PRACH resource or the second PRACH resource as the target PRACH resource;
the first preset condition comprises whether the first PRACH resource and/or the second PRACH resource exist in a first time window after a random access procedure is initiated.

36. The method of any one of claims 22 and 24 to 35, wherein
the target PRACH resource is determined based on a first preset condition and one or more of the following:
a received power or energy of a first reference signal;
a path loss corresponding to the first reference signal;
a cross-link interference level measured by the terminal device; and
a frequency domain location of the second PRACH resource;
wherein the first preset condition comprises whether the first PRACH resource and/or the second PRACH resource exist in a first time window after a random access procedure is initiated.

37. The method of claim 22 or 24, wherein the target PRACH resource is specified in a protocol, and the target PRACH resource is the second PRACH resource.

38. The method of claim 23, wherein
sending second information;
wherein the second information is used to indicate priorities of the first PRACH resource, the second PRACH resource and the third PRACH resource, and the target PRACH resource is a PRACH resource having a highest priority among the first PRACH resource, the second PRACH resource and the third PRACH resource; or,
the second information is used to instruct the terminal device to select one of the first PRACH resource, the second PRACH resource and the third PRACH resource as the target PRACH resource.

39. The method of any one of claims 23 to 38, wherein the first RACH configuration is further used to configure a fourth PRACH resource;
wherein the fourth PRACH resource is invalid; and/or,
the fourth PRACH resource is not within an uplink subband;
wherein the uplink subband is a continuous segment of uplink frequency domain resources.

40. The method of any one of claims 21 to 39, wherein
the first RACH configuration is a non subband full duplex (SBFD)-related RACH configuration, and the second RACH configuration is an SBFD-related RACH configuration.

41. A random access apparatus, applied to a terminal device, comprising:
a first receiving unit, configured to receive a first random access channel (RACH) configuration and/or a second RACH configuration, the first RACH configuration and/or the second RACH configuration being used to configure a plurality of types of physical random access channel (PRACH) resources; and
a first sending unit, configured to send a PRACH on a target PRACH resource, the target PRACH resource being one of the plurality of types of PRACH resources configured by the first RACH configuration and/or the second RACH configuration.

42. A random access apparatus, applied to a network device, comprising:
a second sending unit, configured to send a first random access channel (RACH) configuration and/or a second RACH configuration, the first RACH configuration and/or the second RACH configuration being used to configure a plurality of types of physical random access channel (PRACH) resources; and
a second receiving unit, configured to receive a PRACH on a target PRACH resource, the target PRACH resource being one of the plurality of types of PRACH resources configured by the first RACH configuration and/or the second RACH configuration.

43. A communication device, comprising:
a memory, configured to store a computer program;
a processor connected to the memory, configured to call and run the computer program from the memory to implement the method of any one of claims 1 to 20, or to implement the method of any one of claims 21 to 40;
a transceiver, configured to receive and send information during information interaction with other external devices.

44. A chip, comprising:
a memory, configured to store a computer program;
a processor connected to the memory, configured to call and run a computer program from the memory to enable a device on which the chip is mounted to perform the method according to any one of claims 1 to 20, or perform the method according to any one of claims 21 to 40;
the transceiver, configured to receive and send information during information interaction with other external devices.

45. A computer-readable storage medium storing a computer program that, when executed by at least one processor, enables the at least one processor to implement the method of any one of claims 1 to 20 or the method of any one of claims 21 to 40.

46. A computer program product comprising a computer program or instructions that, when executed by a processor, enables the processor to implement the method of any one of claims 1 to 20 or the method of any one of claims 21 to 40.

47. A computer program that causes a computer to implement the method of any one of claims 1 to 20 or the method of any one of claims 21 to 40.
